# EUROPEAN PATENT APPLICATION

(11) **EP 4 572 214 A1**
(43) Date of publication of application: **18.06.2025**
(21) Application number: 23859493.1
(22) Date of filing: 01.09.2023
(51) Int. Cl.: H04L 5/00, H04W 28/02

(54) **DATA TRANSMISSION METHOD AND APPARATUS**

(30) Priority: 02.09.2022 CN 202211071692
(71) Applicant: Huawei Technologies Co., Ltd., Shenzhen, Guangdong 518129 (CN)
(72) Inventor: SUN, Liang, Shenzhen, Guangdong 518129 (CN); SU, Wei, Shenzhen, Guangdong 518129 (CN)
(74) Representative: Isarpatent
(86) International application number: PCT/CN2023/116473
(87) International publication number: WO 2024/046465

(57) **Abstract**

This application provides a data transmission method and apparatus, to correct a transmission error that occurs during transmission of small-bandwidth data, and improve data transmission reliability. The method may be performed by a receiving device or a component (such as a chip or a chip system) of a receiving device. The method includes: The receiving device receives a data frame, and obtains, from the data frame, first indication information corresponding to a first control periodicity. The data frame includes the first control periodicity, the first control periodicity includes Y slot periodicities, and each of the Y slot periodicities includes y slots. The first indication information is used to determine an amount of data carried in p slots. Y is an integer greater than or equal to 1, y is an integer greater than 1, and p is an integer greater than or equal to 1 and less than or equal to y.

## Description

### TECHNICAL FIELD

This application relates to the field of optical communication, and more specifically, to a data transmission method and apparatus.

### BACKGROUND

With arrival of the fifth-generation fixed network (Fifth-Generation Fixed Network, F5G) era, high-quality connections gradually provide more pipe connections for more terminal users. An optical service unit (Optical Service Unit, OSU) may be used for different bandwidth levels of high-quality private line bearers, and based on an optical transport network (Optical Transport Network, OTN), has flexible bandwidth pipes oriented to an efficient bearer in a metropolitan area network, to implement the efficient bearer for services at a granularity of 10 Mbit/s to 100 Gbit/s.

Currently, cyclic redundancy check is performed on a general overhead and a dedicated overhead of an OSU frame by using a CRC-8 check code in the cyclic redundancy check (cyclic redundancy check, CRC). However, in this method, once a check error occurs, all content in a payload block (payload block, PB) of the OSU is discarded. Therefore, data transmission reliability is affected. With continuous improvement of private line services and enterprise digital construction, a finer slot granularity (for example, 10 M) is proposed.

How to improve data transmission reliability when a bit error occurs during transmission of data with a mini-slot bit width is an urgent problem to be resolved.

### SUMMARY

This application provides a data transmission method and apparatus, to correct a transmission error that occurs during transmission of small-bandwidth data, and improve data transmission reliability.

According to a first aspect, an embodiment of this application provides a data transmission method. The method may be performed by a receiving device or a component (such as a chip or a chip system) of the receiving device. This is not limited in this application. The method includes: receiving a data frame, where the data frame includes a first control periodicity; and obtaining, from the data frame, first indication information corresponding to the first control periodicity, where the first indication information is used to determine an amount of data carried in p slots, the first control periodicity includes Y slot periodicities, and each of the Y slot periodicities includes y slots. Y is an integer greater than or equal to 1, y is an integer greater than 1, and p is an integer greater than or equal to 1 and less than or equal to y.

It should be noted that in this embodiment of this application, the data frame may be an OTN frame or a metro transport network (metro transport network, MTN) frame. Alternatively, with development of an OTN technology and an MTN technology, a new type of OTN frame and a new type of MTN frame may be defined, and are applicable to this application. The data frame provided in this embodiment of this application may include at least one control periodicity, and the first control periodicity is any one of the at least one control periodicity included in the data frame. For example, the data frame in this application may be an OSU frame. When the data transmission method provided in this embodiment of this application is applied to the OSU frame, the OSU frame includes at least one control periodicity, and an amount of data in one or more slots is determined based on the first indication information. This avoids checking an entire OSU payload, so that check reliability is improved.

Based on the foregoing solution, the data transmission method provided in this embodiment of this application is applicable to check of a data frame with a mini-slot bit width. An amount of data carried in a slot in a payload area may be checked based on the first indication information, an amount of data of at least one slot may be checked, and an amount of received data is determined based on a check result, so that an amount of sent data and the amount of received data are the same. This helps improve data transmission reliability, thereby improving system stability.

With reference to the first aspect, in some implementations of the first aspect, that the first indication information is used to determine an amount of data carried in p slots includes: The first indication information is used to determine an amount of data carried in p slots in a Y^{th} slot periodicity of the first control periodicity. Alternatively, the first indication information is used to determine an amount of data carried in p slots in an I^{th} slot periodicity of a second control periodicity. The second control periodicity is a next control periodicity of the first control periodicity, and I is an integer greater than or equal to 1 and less than or equal to Y.

It should be understood that when the first indication information is used to determine the amount of the data carried in the p slots in the I^{th} slot periodicity of the second control periodicity, the I^{th} slot periodicity may be any slot periodicity of the second control periodicity, for example, the 1^{st} slot periodicity or the Y^{th} slot periodicity.

It should be understood that in this embodiment of this application, in some scenarios, the first indication information corresponding to the first control periodicity is used to check a slot in the current control periodicity or check a slot in the next control periodicity of the first control periodicity. Therefore, according to the transmission method provided in this application, flexible check in different transmission scenarios can be implemented.

With reference to the first aspect, in some implementations of the first aspect, when the first indication information is used to determine the amount of the data carried in the p slots in the Y^{th} slot periodicity of the first control periodicity, the first indication information is generated based on a set of second indication information corresponding to p slots in each slot periodicity of the first control periodicity, positions of p slots in each of first Y-1 slot periodicities of the first control periodicity are the same as those of the p slots in the Y^{th} slot periodicity, and an amount of data carried in the p slots in each of the first Y-1 slot periodicities of the first control periodicity is a preset value.

With reference to the first aspect, in some implementations of the first aspect, when the first indication information is used to determine the amount of the data carried in the p slots in the I^{th} slot periodicity of the second control periodicity, the first indication information is generated based on a set of second indication information corresponding to p slots in each slot periodicity of the first control periodicity, positions of the p slots in the I^{th} slot periodicity of the second control periodicity are the same as those of the p slots in the Y slot periodicities of the first control periodicity, an amount of data carried in p slots in each slot periodicity other than the I^{th} slot periodicity of the Y slot periodicities of the first control periodicity is a preset value, and an amount of data carried in p slots in each slot periodicity other than the I^{th} slot periodicity of Y-1 slot periodicities of the second control periodicity is the preset value.

It should be understood that the "preset value" may include a predefined value, for example, a value defined in a protocol. The "predefinition" may be implemented by pre-storing a corresponding code or a table in the device or in another manner in which related information may be indicated. A specific implementation is not limited in this application.

For example, when the first control periodicity is a control periodicity first received by the receiving device, an amount of data carried in p slots in the I^{th} slot periodicity of the first control periodicity may be a preset value. In other words, the amount of the data carried in the p slots in the I^{th} slot periodicity may be an initial default value of the system. When the first control periodicity is not a control periodicity first received by the receiving device, an amount of data carried in p slots in the I^{th} slot periodicity of the first control periodicity is determined by using a set of second indication information corresponding to p slots in each slot periodicity of a third control periodicity, and the third control periodicity is a control periodicity before the first control periodicity. That is, the set of second indication information corresponding to the p slots in each slot periodicity of the third control periodicity forms the first indication information indicating the p slots in the I^{th} slot periodicity of the first control periodicity.

Based on the foregoing solution, the receiving device may determine, by determining a control periodicity, a slot periodicity, and a sequence of slots that are currently received, that an amount of service data in the received slots is a preset value and a value that needs to be determined, to ensure that a total amount of received data remains unchanged, thereby ensuring transmission reliability. In addition, in some implementations of this application, the first indication information may be determined by using the set of second indication information and by using a determining method such as a majority decision. Therefore, although a bit error occurs in the second indication information corresponding to the slot, the error may be corrected through a plurality of times of filtering, so that system performance is ensured.

With reference to the first aspect, in some implementations of the first aspect, the first indication information is generated based on a set of second indication information corresponding to p slots in each slot periodicity of the first control periodicity, and a value of the first indication information is an amount of data carried in the p slots. Based on the foregoing solution, the receiving device may determine, based on the value of the first indication information, the amount of data in the received slots, namely, an amount of data sent by a transmit end, to ensure that a total amount of received data remains unchanged, and ensure transmission reliability.

With reference to the first aspect, in some implementations of the first aspect, the first control periodicity includes N groups, and a quantity of slots in each of the N groups is p. The obtaining, from the data frame, first indication information corresponding to the first control periodicity of the data frame includes: obtaining, from the data frame, first indication information corresponding to an I^{th} group of the first control periodicity of the data frame, where the first indication information corresponding to the I^{th} group is a set of second indication information corresponding to p slots of the I^{th} group, and I is an integer greater than or equal to 1 and less than or equal to N. That the first indication information is used to determine an amount of data carried in p slots includes: The first indication information is used to determine an amount of data carried in p slots of an (I+1)^{th} group.

In a possible implementation, if p is a quantity of slots in each slot periodicity, a quantity of slots in each group of the N groups in the first control periodicity is q. When the q slots are located in the I^{th} group, the first indication information is a set of second indication information corresponding to q slots in an (I-1)^{th} group, and I is an integer greater than 1 and less than or equal to N. Alternatively, when the q slots are in the 1^{st} group, the first indication information is a set of second indication information corresponding to q slots in a last group of a third control periodicity, and the third control periodicity is a control periodicity before the first control periodicity. N is equal to p and q is equal to Y, or N is equal to 2*p and q is equal to Y/2.

It should be noted that the payload area of the data frame provided in this application may include one or more control periodicities. When a plurality of control periodicities are included, the first control periodicity is one of the plurality of control periodicities. In addition, the payload area of the data frame further includes one or more pieces of first indication information corresponding to one or more control periodicities, that is, the payload area of the data frame includes at least one control periodicity and at least one piece of first indication information corresponding to the at least one control periodicity. A structure formed by a control periodicity and first indication information corresponding to the control periodicity is referred to as an intermediate frame or a subframe of the data frame. It should be understood that the payload area of the data frame may include at least one intermediate frame. When the first indication information is formed by second indication information, each of the at least one intermediate frame includes Y*y slots and second indication information corresponding to the Y*y slots. Based on the foregoing solution, consecutive slots used to transmit a same service are grouped together, and an amount of data of each slot in a next group is determined by using first indication information formed by a set of second indication information corresponding to slots in each group, so that check efficiency is improved.

With reference to the first aspect, in some implementations of the first aspect, when the first indication information is used to determine the amount of the data carried in the p slots in the Y^{th} slot periodicity of the first control periodicity, the first control periodicity includes T groups, an i^{th} byte in a first slot of the T groups is used to carry rate justification control JC information, and the first slot is any slot in a last slot periodicity of each of first T-1 groups of the T groups. The i^{th} byte is any byte in the first slot. The first indication information is generated based on the JC, the p slots in the Y^{th} slot periodicity include a slot at a same position in which the JC is carried, and an amount of data carried in the p slots in each of the first Y-1 slot periodicities of the first control periodicity is a preset value. Based on the foregoing solution, a slot may be checked with reference to the JC, so that compatibility with an existing related error correction coding scheme can be implemented, for example, compatibility with the existing protocol G.709 can be implemented.

With reference to the first aspect, in some implementations of the first aspect, in the data frame provided in this embodiment of this application, each slot includes X bytes, the X bytes correspond to M bits, the M bits are used to carry the second indication information, at least one piece of the second indication information is used to generate the first indication information, M is an integer greater than or equal to 1, and X is an integer greater than 1.

With reference to the first aspect, in some implementations of the first aspect, X is equal to 16, 64, or 192, and Y is equal to 4, 6, 8, or 16.

It should be noted that a value of the slot periodicity provided in this embodiment of this application may be determined by comprehensively considering a quantity of bits used for error correction in error correction coding.

According to a second aspect, an embodiment of this application provides a data transmission method. The method may be performed by a receiving device or a component (such as a chip or a chip system) of the receiving device. This is not limited in this application. The method includes: receiving a data frame, where a payload area of the data frame includes at least one slot block, each of the at least one slot block includes M bits and X bytes, the M bits are used to carry first indication information, the X bytes include at least one piece of second indication information, and each piece of the at least one piece of second indication information includes a preset length, a preset position, and a preset value carried in bytes of the preset length and at the preset position. The first indication information indicates that an object carried in the X bytes is data or padding. The slot block is checked based on the first indication information and the at least one piece of second indication information. The object carried in the X bytes being the data or the padding is output based on a check result. M is an integer greater than or equal to 2, and X is an integer greater than 1.

Based on the foregoing solution, according to the data transmission method provided in this application, the receiving device can comprehensively determine, based on both the first indication information and the at least one piece of second indication information, the object carried in the slot. This helps improve check reliability, thereby ensuring communication stability.

With reference to the second aspect, in some implementations of the second aspect, M1 bits in M bits carry first check information, the first check information is used to correct a transmission error of information carried in M2 bits, the M2 bits are bits other than the M1 bits in the M bits, and M1 and M2 are integers greater than or equal to 1.

With reference to the second aspect, in some implementations of the second aspect, the X bytes further include third indication information and second check information, the third indication information indicates that a quantity of bytes that are in the X bytes and that are used to carry service data is 0, and the second check information is used to correct a transmission error of the third indication information. The checking the slot block based on the first indication information and the at least one piece of second indication information includes: checking the slot block based on the first indication information, the at least one piece of second indication information, and the second check information.

With reference to the second aspect, in some implementations of the second aspect, the X bytes further include fourth indication information and third check information, the fourth indication information indicates a preset length, a preset position, and a preset value of the second indication information, and the third check information is used to correct a transmission error of the fourth indication information. The checking the slot block based on the first indication information and the at least one piece of second indication information includes: checking the slot block based on the first indication information, the at least one piece of second indication information, and the third check information.

It should be understood that there may be a plurality of check relationships among the first indication information, the at least one piece of second indication information, the second check information, and the third check information. The receiving device may comprehensively determine the check result based on different combinations, to ensure communication stability.

According to a third aspect, an embodiment of this application provides a data transmission method. The method may be performed by a sending device or a component (such as a chip or a chip system) of the sending device. This is not limited in this application. The method includes: sending a data frame. The data frame includes a first control periodicity, the first control periodicity corresponds to first indication information, the first indication information is used to determine an amount of data carried in p slots, the first control periodicity includes Y slot periodicities, and each of the Y slot periodicities includes y slots. Y is an integer greater than or equal to 1, y is an integer greater than 1, and p is an integer greater than or equal to 1 and less than or equal to y.

With reference to the third aspect, in some implementations of the third aspect, that the first indication information is used to determine an amount of data carried in p slots includes: The first indication information is used to determine an amount of data carried in p slots in a Y^{th} slot periodicity of the first control periodicity. Alternatively, the first indication information is used to determine an amount of data carried in p slots in an I^{th} slot periodicity of a second control periodicity. The second control periodicity is a next control periodicity of the first control periodicity, and I is an integer greater than or equal to 1 and less than or equal to Y.

With reference to the third aspect, in some implementations of the third aspect, when the first indication information is used to determine the amount of the data carried in the p slots in the Y^{th} slot periodicity of the first control periodicity, the first indication information is generated based on a set of second indication information corresponding to p slots in each slot periodicity of the first control periodicity. Positions of p slots in each of first Y-1 slot periodicities of the first control periodicity are the same as those of the p slots in the Y^{th} slot periodicity. An amount of data carried in the p slots in each of the first Y-1 slot periodicities of the first control periodicity is a preset value.

With reference to the third aspect, in some implementations of the third aspect, when the first indication information is used to determine the amount of the data carried in the p slots in the I^{th} slot periodicity of the second control periodicity, the first indication information is generated based on a set of second indication information corresponding to p slots in each slot periodicity of the first control periodicity. Positions of the p slots in the I^{th} slot periodicity of the second control periodicity are the same as those of p slots in the Y slot periodicities of the first control periodicity. An amount of data carried in p slots in each slot periodicity other than the I^{th} slot periodicity of the Y slot periodicities of the first control periodicity is a preset value. An amount of data carried in p slots in each slot periodicity other than the I^{th} slot periodicity of Y-1 slot periodicities of the second control periodicity is the preset value.

With reference to the third aspect, in some implementations of the third aspect, the first indication information is generated based on a set of second indication information corresponding to p slots in each slot periodicity of the first control periodicity, and a value of the first indication information is an amount of data carried in the p slots.

With reference to the third aspect, in some implementations of the third aspect, the first control periodicity includes N groups, a quantity of slots in each of the N groups is p, and the first indication information is generated based on a set of second indication information corresponding to p slots in an I^{th} group. That the first indication information is used to determine an amount of data carried in p slots includes: The first indication information is used to determine an amount of data carried in p slots of an (I+1)^{th} group.

With reference to the third aspect, in some implementations of the third aspect, when the first indication information is used to determine the amount of the data carried in the p slots in the Y^{th} slot periodicity of the first control periodicity, the first control periodicity includes T groups, an i^{th} byte in a first slot of the T groups is used to carry rate justification control JC information, and the first slot is any slot in a last slot periodicity of each of first T-1 groups of the T groups. The i^{th} byte is any byte in the first slot. The first indication information is generated based on the JC, the p slots in the Y^{th} slot periodicity include a slot at a same position in which the JC is carried, and an amount of data carried in the p slots in each of the first Y-1 slot periodicities of the first control periodicity is a preset value.

According to a fourth aspect, an embodiment of this application provides a data transmission method. The method may be performed by a sending device or a component (such as a chip or a chip system) of the sending device. This is not limited in this application. The method includes: sending a data frame, where a payload area of the data frame includes at least one slot block, each of the at least one slot block includes M bits and X bytes, the M bits are used to carry first indication information, the X bytes include at least one piece of second indication information, and each piece of the at least one piece of second indication information includes a preset length, a preset position, and a preset value carried in bytes of the preset length and at the preset position. The first indication information indicates that an object carried in the X bytes is data or padding. The first indication information and the at least one piece of second indication information are used to check the slot block. M is an integer greater than or equal to 2, and X is an integer greater than 1.

With reference to the fourth aspect, in some implementations of the fourth aspect, M1 bits in M bits carry first check information, the first check information is used to correct a transmission error of information carried in M2 bits, the M2 bits are bits other than the M1 bits in the M bits, and M1 and M2 are integers greater than or equal to 1.

With reference to the fourth aspect, in some implementations of the fourth aspect, the X bytes further include third indication information and second check information, the third indication information indicates that a quantity of bytes that are in the X bytes and that are used to carry service data is 0, and the second check information is used to correct a transmission error of the third indication information. That the first indication information and the at least one piece of second indication information are used to check the slot block includes: The first indication information, the at least one piece of second indication information, and the second check information are used to check the slot block.

With reference to the fourth aspect, in some implementations of the fourth aspect, the X bytes further include fourth indication information and third check information, the fourth indication information indicates a preset length, a preset position, and a preset value of the second indication information, and the third check information is used to correct a transmission error of the fourth indication information. That the first indication information and the at least one piece of second indication information are used to check the slot block includes: The first indication information, the at least one piece of second indication information, and the third check information are used to check the slot block.

According to a fifth aspect, an embodiment of this application provides a data transmission apparatus. The apparatus is configured to perform the method according to the first aspect, or is configured to perform the method according to the second aspect. Specifically, the data transmission apparatus may include a unit and/or a module configured to perform the method according to the first aspect or any implementation in the first aspect, or the data transmission apparatus may include a unit and/or a module configured to perform the method according to the second aspect or any implementation in the second aspect, such as a processing module and a transceiver module.

In an implementation, the data transmission apparatus may include a unit and/or a module configured to perform the method according to the first aspect or any implementation in the first aspect, or include a unit and/or a module configured to perform the method according to the second aspect or any implementation in the second aspect, and is a receive end device. The transceiver module may be a transceiver or an input/output interface. The processing module may be at least one processor. Optionally, the transceiver may be a transceiver circuit. Optionally, the input/output interface may be an input/output circuit.

In another implementation, the data transmission apparatus is a chip, a chip system, or a circuit in a receive end device. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

According to a sixth aspect, an embodiment of this application provides a data transmission apparatus. The apparatus is configured to perform the method according to the third aspect, or is configured to perform the method according to the fourth aspect. Specifically, the data transmission apparatus may include a unit and/or a module configured to perform the method according to the third aspect, or the data transmission apparatus may include a unit and/or a module configured to perform the method according to the fourth aspect, such as a processing module and a transceiver module.

In an implementation, the data transmission apparatus is a transmit end device. The transceiver module may be a transceiver or an input/output interface. The processing module may be at least one processor. Optionally, the transceiver may be a transceiver circuit. Optionally, the input/output interface may be an input/output circuit.

In another implementation, the data transmission apparatus is a chip, a chip system, or a circuit in a transmit end device. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

According to a seventh aspect, an embodiment of this application provides a processor, configured to perform the methods according to the foregoing aspects.

Unless otherwise specified, or if operations such as sending and obtaining/receiving related to the processor do not conflict with actual functions or internal logic of the processor in related descriptions, the operations may be understood as operations such as output, receiving, and input of the processor, or may be understood as sending and receiving operations performed by a radio frequency circuit and an antenna. This is not limited in this application.

According to an eighth aspect, an embodiment of this application provides a computer-readable storage medium. The computer-readable storage medium stores program code to be executed by a device, and the program code includes instructions used to perform the method according to any implementation in the first aspect to the fourth aspect.

According to a ninth aspect, an embodiment of this application provides a computer program product including instructions. When the computer program product runs on a computer, the computer is enabled to perform the method according to any implementation in the first aspect to the fourth aspect.

According to a tenth aspect, an embodiment of this application provides a chip. The chip includes a processor and a communication interface. The processor reads, through the communication interface, instructions stored in a memory, to perform the method according to any implementation in the first aspect to the fourth aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method according to any implementation in the first aspect to the fourth aspect.

According to an eleventh aspect, an embodiment of this application provides a communication system, including at least two data transmission apparatuses according to the fifth aspect.

For beneficial effects achieved by the third aspect to the eleventh aspect, refer to descriptions of beneficial effects in the first aspect or descriptions of beneficial effects in the second aspect. Details are not described herein again.

### BRIEF DESCRIPTION OF DRAWINGS

FIG. 1 is a schematic diagram of an OTN optical network system to which an embodiment of this application is applicable;
FIG. 2 is a schematic diagram of a possible hardware structure of a network device;
FIG. 3 is a schematic diagram of a frame structure of an OTN frame;
FIG. 4 is a schematic flowchart of a data transmission method 400 according to an embodiment of this application;
FIG. 5 is a schematic diagram of a structure of a 130-bit slot block according to an embodiment of this application;
FIG. 6 is a schematic diagram of slot arrangement of an OTN frame including a 130-bit slot block according to an embodiment of this application;
FIG. 7 is a schematic flowchart of a data transmission method 700 according to an embodiment of this application;
FIG. 8(a) and FIG. 8(b) are a schematic diagram of a first specific implementation of a data transmission method according to an embodiment of this application;
FIG. 9 is a schematic diagram of a first code table corresponding to a 130-bit slot block according to an embodiment of this application;
FIG. 10 is a schematic diagram of a second specific implementation of a data transmission method according to an embodiment of this application;
FIG. 11(a) and FIG. 11(b) are a schematic diagram of a third specific implementation of a data transmission method according to an embodiment of this application;
FIG. 12 is a schematic diagram of first information according to an embodiment of this application;
FIG. 13 is a schematic diagram of second information according to an embodiment of this application;
FIG. 14 is a schematic diagram of a fourth specific implementation of a data transmission method according to an embodiment of this application;
FIG. 15 is a schematic diagram of a fifth specific implementation of a data transmission method according to an embodiment of this application;
FIG. 16 is a schematic diagram of a second code table corresponding to a 130-bit slot block according to an embodiment of this application;
FIG. 17 is a schematic block diagram of a data transmission apparatus 1700 according to an embodiment of this application; and
FIG. 18 is a schematic diagram of a structure of a possible data transmission device according to an embodiment of this application.

### DESCRIPTION OF EMBODIMENTS

The following describes technical solutions of this application with reference to the accompanying drawings.

For ease of understanding of embodiments of this application, the following descriptions are provided.
1. The terms "first", "second", "third", and various numbers in the text descriptions or accompanying drawings in embodiments of this application shown below are merely used for differentiation for ease of description, but do not necessarily indicate a specific order or sequence, and are not intended to limit the scope of embodiments of this application. For example, different indication information or error correction information is distinguished from each other.
2. The terms "include", "have" and any other variants thereof in embodiments of this application shown below are intended to cover non-exclusive inclusion. For example, a process, method, system, product, or device that includes a list of steps or units is not necessarily limited to those steps or units that are expressly listed, but may include other steps or units that are not expressly listed or inherent to the process, method, product, or device.
3. In embodiments of this application, the term such as "example" or "for example" is used to represent giving an example, an illustration, or a description. An embodiment or a design solution described with "example" or "for example" should not be explained as being more preferred or having more advantages than another embodiment or design solution. Use of the term such as "example" or "for example" is intended to present a relative concept in a specific manner for ease of understanding.
4. In embodiments of this application, service data is a service that may be carried in an optical transport network. For example, the service may be an Ethernet service, a packet service, or a wireless backhaul service. The service data may also be referred to as a service signal, client data, or client service data. It should be understood that a type of the service data is not limited in embodiments of this application.
5. In this application, "used for indication" includes a direct indication and an indirect indication. When that a piece of information indicates A is described, the information may directly or indirectly indicates A, but it does not necessarily indicate that the information carries A.
6. In embodiments of this application shown below, the embodiments are described by only using an OTN frame in an optical transport network (optical transport network, OTN) as an example. It should be understood that other bearer OTN frames, or metro transport network (metro transport network, MTN) frames, or a new type of OTN frame and a new type of MTN frame that may be defined with development of an OTN technology and an MTN technology are also applicable to this application.
7. A control periodicity and an intermediate frame (or referred to as a subframe) are used in embodiments of this application. When a payload area of a data frame includes a control periodicity, the payload area of the data frame includes at least one control periodicity, where each control periodicity includes Y slot periodicities, and each of the Y slot periodicities includes y slots. In addition, each slot in the payload area corresponds to one piece of indication information, and the indication information corresponding to the slot may be, for example, one of p pieces of second indication information corresponding to the following p slots. In addition, the payload area of the data frame further includes one or more pieces of first indication information, and the one or more pieces of first indication information corresponds to one or more control periodicities. A structure formed by a control periodicity and first indication information corresponding to the control periodicity may be referred to as an intermediate frame or a subframe of the data frame. In this case, the first indication information is generated by using a set of second indication information. In other words, each of at least one intermediate frame includes Y*y slots and second indication information corresponding to the Y*y slots. It should be understood that the payload area of the data frame may include at least one intermediate frame.
8. In embodiments of this application, a device may also be referred to as a node or a node device, and a sending device may be referred to as a sending node, a transmit end, or a source node. Similarly, a receiving device may be referred to as a receive end device, a receive end, or a sink node.

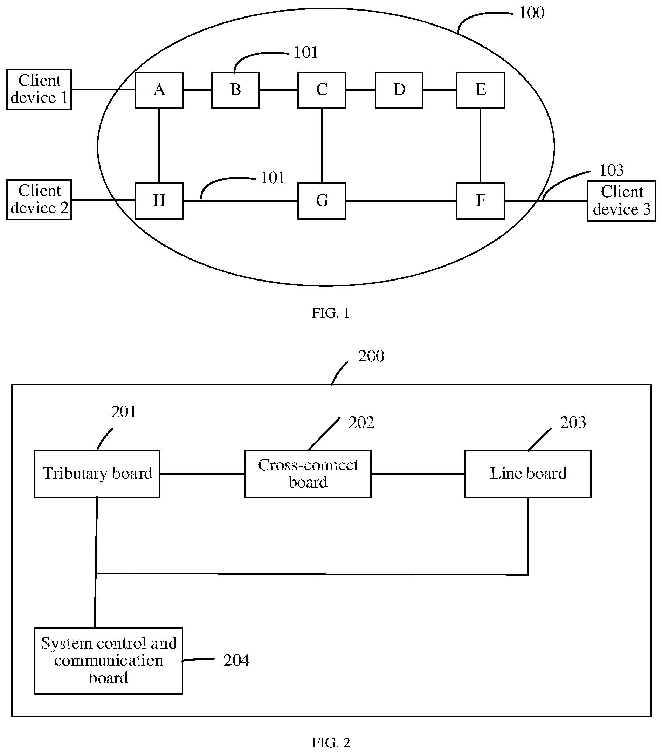

FIG. 1 is a schematic diagram of an OTN optical network system to which an embodiment of this application is applicable. Usually, an OTN optical network is formed by connecting a plurality of devices through optical fibers, and different topology types such as a line type, a ring type, and a mesh type may be formed based on a specific requirement. An OTN 100 shown in FIG. 1 includes eight OTN devices 101, namely, devices A to H. 102 represents an optical fiber, configured to connect two devices, and 103 represents a client service interface, configured to receive or send client service data. As shown in FIG. 1, the OTN 100 is configured to transmit service data for client devices 1 to 3. A client device is connected to an OTN device through a client service interface. For example, in FIG. 1, the client devices 1 to 3 are respectively connected to the OTN devices A, H, and F.

In FIG. 1, when the client device 1 needs to communicate with the client device 3, the client device 1 may send service data via the OTN devices A to F. In this case, the OTN device A may be a sending device, the OTN devices B to E may be intermediate devices, and the OTN device F may be a receiving device.

It should be understood that in the system provided in this application, there may be one or more intermediate devices. Certainly, in some scenarios, there may be no intermediate device. For ease of description, the following describes a procedure of a slot configuration method according to an embodiment of this application by using an example in which there is no intermediate device.

Usually, the OTN devices include an optical-layer device, an electrical-layer device, and an optical-electrical hybrid device. The optical-layer device is a device that can process an optical-layer signal, for example, an optical amplifier (optical amplifier, OA) or an optical add-drop multiplexer (optical add-drop multiplexer, OADM). The OA may also be referred to as an optical line amplifier (optical line amplifier, OLA), and is mainly configured to amplify an optical signal, to support a longer transmission distance of the optical signal while ensuring specific performance of the optical signal. The OADM is configured to perform space conversion on the optical signal so that the optical signal can be output from different output ports (sometimes, an output port is also referred to as a direction). The electrical-layer device is a device that can process an electrical-layer signal, for example, a device that can process an OTN signal. The optical-electrical hybrid device is a device that has a capability of processing an optical-layer signal and an electrical-layer signal. It should be noted that based on a specific integration requirement, one OTN device may integrate a plurality of different functions. The technical solutions provided in this application are applicable to OTN devices that include an electrical-layer function and that have different forms and integration degrees.

It should be noted that a data frame structure used by the OTN device in this embodiment of this application is an OTN frame, and is used to carry various service data and provide rich management and monitoring functions. The OTN frame may be an optical data unit k (optical data unit k, ODUk) frame, an ODUCn frame, an ODUflex frame, an optical transport unit k (optical transport unit k, OTUk) frame, an OTUCn frame, a flexible OTN (FlexO) frame, or the like. A difference between an ODU frame and an OTU frame lies in that the OTU frame includes the ODU frame and an OTU overhead. k represents a different rate level, for example, k=1 represents 2.5 Gbps and k=4 represents 100 Gbps; and Cn represents a variable rate, and is specifically a rate that is a positive integer multiple of 100 Gbps. Unless otherwise specified, the ODU frame is any one of the ODUk frame, the ODUCn frame, or the ODUflex frame, and the OTU frame is any one of the OTUk frame, the OTUCn frame, or the FlexO frame. With development of an OTN technology, a new type of OTN frame may be defined, and is also applicable to this application.

FIG. 2 is a schematic diagram of a possible hardware structure of a network device. For example, the network device is the device A in FIG. 1. Specifically, an OTN device 200 includes a tributary board 201, a cross-connect board 202, a line board 203, an optical-layer processing board (not shown in the figure), and a system control and communication board 204. A type of the board included in the network device and a quantity of boards included in the network device may be different based on a requirement. For example, a network device used as a core node has no tributary board 201. For another example, a network device used as an edge node has a plurality of tributary boards 201, or has no optical cross-connect board 202. For another example, a network device that supports only an electrical-layer function may have no optical-layer processing board.

The tributary board 201, the cross-connect board 202, and the line board 203 are configured to process an electrical-layer signal of an OTN. The tributary board 201 is configured to: receive and send various client services, for example, an SDH service, a packet service, an Ethernet service, and a fronthaul service. Further, the tributary board 201 may be divided into a client-side optical transceiver module and a signal processor. The client-side optical transceiver module may also be referred to as an optical transceiver, and is configured to receive and/or send service data. The signal processor is configured to implement mapping and demapping between the service data and a data frame. The cross-connect board 202 is configured to exchange a data frame, to complete exchange of one or more types of data frames. The line board 203 mainly processes a line-side data frame. Specifically, the line board 203 may be divided into a line-side optical module and a signal processor. The line-side optical module may be referred to as an optical transceiver, and is configured to receive and/or send a data frame. The signal processor is configured to multiplex and demultiplex a line-side data frame, or map and demap a line-side data frame. The system control and communication board 204 is configured to implement system control. Specifically, the system control and communication board 204 may collect information from different boards, or send a control instruction to a corresponding board. It should be noted that unless otherwise specified, there may be one or more specific components (for example, a signal processor). This is not limited in this application. It should be further noted that a type of the board included in the device, a function design of the board and the quantity of boards are not limited in this application. It should be noted that in specific implementation, the foregoing two boards may be designed as one board. In addition, the network device may further include a backup power supply, a fan for heat dissipation, and the like.

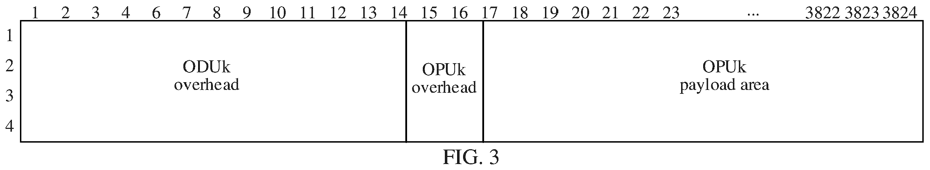

FIG. 3 is a schematic diagram of a frame structure of an OTN frame. As shown in FIG. 3, the OTN frame is of a four-row and multi-column frame structure, including an overhead area and a payload area. The payload area of the OTN frame is divided into a plurality of payload blocks (payload blocks, PBs). Each PB occupies a position of a fixed length (which may also be referred to as a size) in the payload area, for example, 128 bytes. The overhead area of the OTN frame includes, for example, a frame alignment signal (Frame Alignment Signal, FAS) used for frame alignment. For the specific OTN frame structure, refer to related descriptions in a current protocol. Details are not described herein again.

As one of key OTN technologies, an optical service unit (optical service unit, OSU) is mainly configured to carry client services at a rate of 10 M to 100 Gbps. The OSU is configured to carry a low-speed small-granularity service signal, and the OSU is then mapped into an ODUk/ODUflex, to reduce a service transmission latency and increase a quantity of ports for carrying a service. This resolves low efficiency of carrying the low-speed small-granularity service in the original OTN technology.

Although an OSU technology is introduced to implement an efficient carrier for services with different granularities ranging from 2 M to 100 Gbps, when cyclic redundancy check is performed on a general overhead and a dedicated overhead of the OSU frame by using a CRC-8 check code, all data in the PB is discarded once the check fails, resulting in unreliable data transmission. In addition, with advent of an F5G era, more OTN frames with smaller granularities may be developed in the future, to meet gradually refined requirements for private line services in different scenarios. Therefore, how to improve data transmission reliability in a case of a bit error for a smaller-bandwidth PB is a problem to be resolved.

In view of this, this application provides a data transmission method. A check rule for a small-bandwidth PB length in a time division multiplexing scenario is defined, to improve data transmission reliability in a case of a bit error while ensuring a low transmission latency and a low jitter.

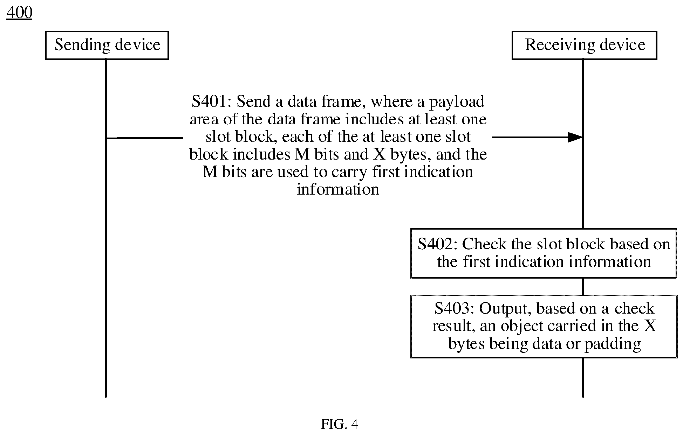

FIG. 4 is a schematic flowchart of a data transmission method 400 according to an embodiment of this application. As shown in FIG. 4, a sending device may be an OTN device, or the method may be performed by a component (such as a chip or a chip system) of the OTN device. A receiving device may be an OTN device, or the method may be performed by a component (such as a chip or a chip system) of the OTN device. Specifically, the method includes the following plurality of steps.

S401: The sending device sends a data frame to the receiving device.

Specifically, the data frame is used to carry service data. A payload area of the data frame includes at least one slot block, and each of the at least one slot block includes M bits and X bytes. The M bits in each slot block are used to carry first indication information, and the first indication information indicates that an object carried in the X bytes in the slot block is data or padding.

In a possible implementation, M1 bits in the M bits carry first check information, and the first check information is used to correct a transmission error of information carried in M2 bits, where M1 and M2 are integers greater than or equal to 1.

It should be noted that the first check information may be used to perform error detection by using a cyclic redundancy check (cyclic redundancy check, CRC) code and an error correction code (error correction code, ECC) or another error correction technology. This is not limited in this application.

Optionally, the M2 bits may be bits other than M1 bits in the M bits. In this case, M2+M1=M. Alternatively, the M2 bits may be a subset of all bits other than the M1 bits in the M bits. That is, M2+M1≤M. It should be understood that in this application, a quantity of bits in the M bits occupied by M1 and a quantity of bits in the M bits occupied by M2 are not limited.

In a possible implementation, the M1 bits in the M bits may be referred to as a control code (control code, C), and the M2 bits may be referred to as a control check code.

S402: The receiving device checks the slot block based on the first indication information.

Specifically, after receiving the data frame from the sending device, the receiving device checks each slot block based on the first indication information of each slot block.

In a possible implementation, X bytes of each slot block in the data frame further include at least one piece of second indication information, and each piece of the at least one piece of second indication information includes a preset length, a preset position, and a preset value carried in bytes of the preset length and at the preset position. One preset value corresponds to one or more pieces of second indication information. That is, there may be a one-to-one correspondence between the second indication information and the preset value. To be specific, each piece of second indication information corresponds to one preset value, or a plurality of pieces of second indication information correspond to the same preset value. The preset value may also be referred to as a fixed value, a fixed pattern, a filling pattern, or the like.

When the X bytes of each slot block in the data frame further include the at least one piece of second indication information, the receiving device may check the X bytes of each slot block based on the first indication information and the at least one piece of second indication information.

It should be noted that the "preset value" may include a predefined value, for example, a value defined in a protocol. The "predefinition" may be implemented by pre-storing a corresponding code or a table in the device or in another manner in which related information may be indicated. A specific implementation is not limited in this application.

In a possible implementation, the receiving device may obtain the preset value by receiving signaling from a network management device. Alternatively, in another possible implementation, the preset value is obtained by receiving signaling that is of the sending device and that indicates the preset value. A specific implementation of the preset value is not limited in this application.

In addition, in another possible implementation, the X bytes of each slot block in the data frame further include third indication information and second check information. The third indication information indicates that a quantity of bytes that are in the X bytes and that are used to carry the service data is 0, and the second check information is used to correct a transmission error of the third indication information. The second check information may also be used to perform error detection by using a CRC and an ECC or another error correction technology. This is not limited in this application.

It should be understood that when the X bytes of each slot block in the data frame further include the third indication information and the second check information, the receiving device may check the X bytes of each slot block based on the first indication information, the at least one piece of second indication information, and the second check information.

In another possible implementation, the X bytes of each slot block in the data frame further include fourth indication information and third check information. The fourth indication information indicates a preset length, a preset position, and a preset value of the second indication information. The third check information is used to correct a transmission error of the fourth indication information, and the third check information may also be used to perform error detection by using a CRC and an ECC or another error correction technology.

It should be understood that when the X bytes of each slot block in the data frame further include the fourth indication information and the third check information, the receiving device may check the X bytes of each slot block based on the first indication information, the at least one piece of second indication information, the second check information, and the third check information.

S403: The receiving device outputs, based on a check result, the object carried in the X bytes being data or padding.

Specifically, the receiving device checks the X bytes of each slot block in S402. Because there may be a case in which content obtained from the payload area of the data frame is different from original content sent by the sending device due to a bit error in the receiving device, the receiving device may obtain a check result that the check succeeds or fails. The receiving device needs to make, based on the check result, a judgment that is most likely to be close to the original content, to output the object carried in each slot block.

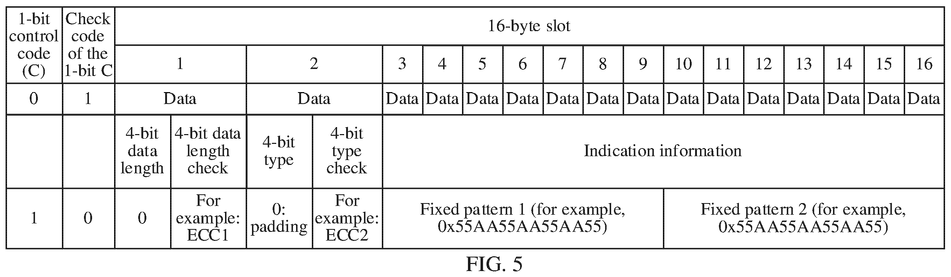

In a specific implementation, the slot block of the data frame may be defined as a 130-bit slot block shown in FIG. 5. In the slot block, the first indication information is carried by using two bits, to indicate an object carried in a slot corresponding to 16 bytes. The 2^{nd} bit in the two bits is used to correct a transmission error of information carried in the 1^{st} bit.

When a value of the two bits is 01, it indicates that all objects carried in the 16-byte slot are service data. When a value of the two bits is 10, it indicates that objects carried in the 16-byte slot are padding.

In a possible implementation, when the value of the 2 bits is 10, the 3^{rd} byte to the 16^{th} byte in the 16 bytes may be used as an indication field in which the second indication information is carried. In FIG. 5, the 3^{rd} byte to the 9^{th} byte carry the 1^{st} piece of second indication information, for indicating that the 3^{rd} byte to the 9^{th} byte are used to carry the 1^{st} fixed pattern (a fixed pattern 1: 0x55AA55AA55AA55 in FIG. 5), and the 10^{th} byte to the 16^{th} byte carry the 2^{nd} piece of second indication information, for indicating that the 10^{th} byte to the 16^{th} byte are used to carry the 2^{nd} fixed pattern (a fixed pattern 2: 0x55AA55AA55AA55 in FIG. 5).

In another possible implementation, when the value of the two bits is 10, the 1^{st} byte in the 16 bytes may be used as an indication field in which third indication information (for example, a 4-bit data length in FIG. 5) and second check information (for example, 4-bit data length check code in FIG. 5) are carried. The third indication information indicates that a quantity of bytes of the service data carried in the 16-byte slot is 0. The second check information is used to correct a transmission error of the third indication information (for example, to perform check by using an ECC in FIG. 5).

In another possible implementation, when the value of the two bits is 10, the 2^{nd} byte in the 16 bytes may be used as an indication field in which fourth indication information (for example, a 4-bit type in FIG. 5) and third check information (for example, 4-bit type check code in FIG. 5) are carried. The fourth indication information indicates a type of the object carried in the 16-byte slot. For example, when the 4 bits are 0000, it indicates that the object carried in the slot is padding. When the 4 bits are 0001, it indicates that the object carried in the slot includes a preset value, for example, the fixed pattern 1 in FIG. 5. The second check information is used to correct a transmission error of the fourth indication information (for example, to perform check by using an ECC in FIG. 5).

Specifically, the receiving device may make, based on the foregoing several scenarios, a comprehensive judgment that is most likely to be close to the original content, and output a determining result, as shown in Table 1.

**Table 1**

| Receive end input | | | | | Receive end output |
|---|---|---|---|---|---|
| C and C check | Length check | Type check | Fixed pattern 1 | Fixed pattern 2 | Output |
| 01 | NA | NA | NA | NA | Data |
| 00/11 | NOK | NA | NA | NA | Data |
| | NA | NOK | NA | NA | Data |
| | NA | NA | NOK | NA | Data |
| | NA | NA | NA | NOK | Data |
| | OK | OK | OK | OK | Padding |
| 10 | OK | OK | OK | OK | Padding |
| | OK | OK | OK | NOK | Padding |
| | OK | OK | NOK | OK | Padding |
| | OK | NOK | OK | OK | Padding |
| | NOK | OK | OK | OK | Padding |
| | NOK | NOK | NA | NA | Data |
| | NOK | NA | NOK | NA | Data |
| | NOK | NA | NA | NOK | Data |
| | NA | NOK | NOK | NA | Data |
| | NA | NOK | NA | NOK | Data |
| | NA | NA | NOK | NOK | Data |

Table 1 is described by using an example. In Table 1, for example, in a first row, when first indication information (C and C check in Table 1, the same below) is 01, the receiving device may determine, regardless of check results of the length check, the type check, the fixed pattern 1, and the fixed pattern 2, that the 16-byte slot is used to carry service data. If the first indication information is 00/11, provided that the receiving device determines that an error occurs in any one of the length check, the type check, the fixed pattern 1, and the fixed pattern 2, the receiving device outputs the 16-byte slot used to carry the service data. If the first indication information is 00/11, provided that the receiving device determines that the length check, the type check, the fixed pattern 1, and the fixed pattern 2 are all correctly checked, the receiving device outputs the 16-byte slot used to carry padding. When the first indication information is 10, provided that the receiving device determines that an error occurs in any one of the length check, the type check, the fixed pattern 1, and the fixed pattern 2, and other check results are correct, the receiving device outputs the 16-byte slot used to carry service padding. If the first indication information is 10, provided that the receiving device determines that a check error occurs in any two of the length check, the type check, the fixed pattern 1, and the fixed pattern 2, the receiving device outputs the 16-byte slot used to carry service data.

It should be noted that descriptions are provided by using an example in which the foregoing implementation is only for the 16-byte-width slot, and the first indication information is carried in the 2 bits. A quantity of bits and a quantity of bytes included in the designed slot block are not limited in this application. In other words, a slot block including another quantity of bits and another quantity of bytes, provided that the foregoing method is used for check, should fall within the protection scope of this application. In addition, FIG. 5 is merely an example. A position of a byte occupied by each indication field is not limited in this application, and a quantity of bytes included in a slot is not limited either. For example, the third indication information and the second check information may alternatively be carried by using the 2^{nd} byte.

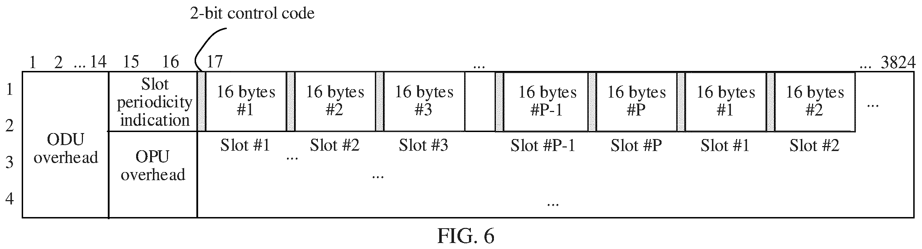

It should be understood that when an OTN frame is divided by using the slot block shown in FIG. 5 (each 130-bit slot block includes a 2-bit payload and a 128-bit (16-byte) payload), a schematic diagram of slot arrangement of the OTN frame may be shown in FIG. 6. In this scenario, an OPU payload area is divided into P slots, and each slot block is 130 bits. In addition, a start position of a slot periodicity may be further indicated by using overheads (two bytes) in a 15^{th} column and a 16^{th} column of a first row in an OTN frame structure. The slot periodicity may be defined as a slot periodicity including n slots, and a position of a start byte of each slot periodicity is a start position of the slot periodicity.

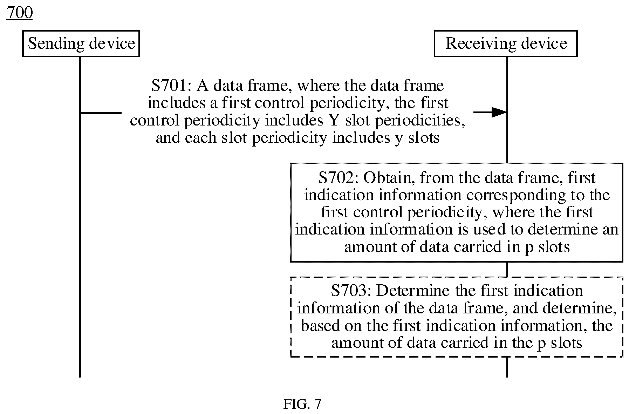

FIG. 7 is a schematic flowchart of a data transmission method 700 according to an embodiment of this application. As shown in FIG. 7, a sending device may be an OTN device, or the method may be performed by a component (such as a chip or a chip system) of the OTN device. A receiving device may be an OTN device, or the method may be performed by a component (such as a chip or a chip system) of the OTN device. Specifically, the method includes the following plurality of steps.

S701: The sending device sends a data frame to the receiving device, where the data frame includes a first control periodicity, the first control periodicity includes Y slot periodicities, and each of the Y slot periodicities includes y slots.

It should be noted that a payload area of the data frame sent by the sending device to the receiving device may include a plurality of control periodicities, each of the plurality of control periodicities includes Y slot periodicities, and each slot periodicity includes y slots. It should be understood that the first control periodicity is one of W control periodicities. Y is an integer greater than or equal to 1, and y is an integer greater than 1. The 16-byte slot described in FIG. 5 is still used as an example. In the schematic diagram of the slot arrangement of the OTN frame shown in FIG. 6, the y slots may form one slot periodicity, and the Y slot periodicities may form one control periodicity. For example, when 16 slots form one slot periodicity, and 8 slot periodicities form one control periodicity, the OTN frame shown in FIG. 6 is divided into a plurality of control periodicities.

S702: The receiving device obtains, from the data frame, first indication information corresponding to the first control periodicity, where the first indication information is used to determine an amount of data carried in p slots, and the first indication information corresponds to the first control periodicity. p is an integer greater than or equal to 1 and less than or equal to y.

In a possible implementation, the method 700 further includes the following step S703.

S703: The receiving device determines the first indication information of the data frame, and determines, based on the first indication information, the amount of the data carried in the p slots.

Based on the method provided in this embodiment of this application, the receiving device may determine, by using the first indication information, an amount of data carried in one or more slots. The method may be used to check transmission of small-bandwidth data. According to the method in this application, data transmission reliability can be ensured, and user experience can be further improved.

The following describes in detail, with reference to different forms of the first indication information, five specific implementations of the data transmission method provided in this application.

In a first possible implementation, the first indication information is a set of second indication information corresponding to the p slots in each slot periodicity of the first control periodicity, and the receiving device determines, based on the set of second indication information corresponding to the p slots in each slot periodicity of the first control periodicity, an amount of data carried in p slots in a Y^{th} slot periodicity of the first control periodicity.

Positions of p slots in each of first Y-1 slot periodicities of the first control periodicity are the same as those of the p slots in the Y^{th} slot periodicity, and an amount of data carried in the p slots in each of the first Y-1 slot periodicities of the first control periodicity is a preset value.

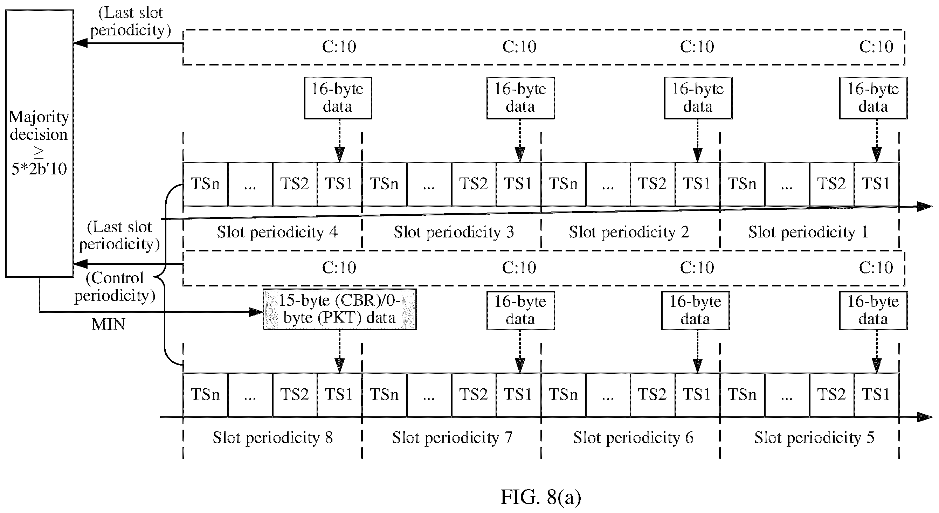

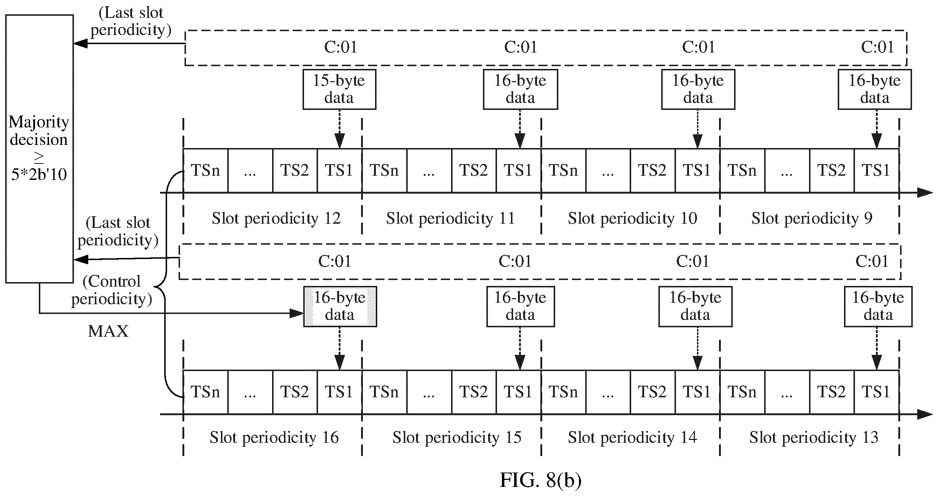

Optionally, the preset value may be predefined, for example, defined in a protocol. In other words, when receiving the Y slot periodicities of the first control periodicity, the receiving device may determine, based on a position or a time sequence number or a time sequence position of the slot periodicity (to be specific, the slot periodicity is a specific slot periodicity of the first control periodicity), the amount of the data carried in the p slots in each of the first Y-1 slot periodicities of the first control periodicity. The amount of the data carried in the p slots in each of the first Y-1 slot periodicities of the first control periodicity may be the same, or may be different, or may be partially the same. This is not limited in this application. In some possible implementations, when each slot includes 16 bytes, the preset value may be 16-byte data, 15-byte data, 0-byte data, or the like. Specifically, descriptions are provided with reference to FIG. 8(a) and FIG. 8(b). In FIG. 8(a), the first control periodicity includes eight slot periodicities (that is, Y is equal to 8), and each slot periodicity includes n slots (time slots, TSs). Each of first seven slot periodicities includes one slot (that is, p is equal to 1), namely, TS1 in each slot periodicity in FIG. 8(a) and FIG. 8(b), and each preset value carried in the seven TS1s is 16-byte service data. After receiving all slots of the first control periodicity, the receiving device receives, in total, a set of second indication information corresponding to eight TS1s, namely, a control code (C) in FIG. 8(a) and FIG. 8(b). The set of eight pieces of second indication information forms first indication information. The receiving device determines, based on the set of eight pieces of second indication information and by using a majority decision, an amount of data carried in the TS1 in an 8^{th} slot periodicity.

For example, when determining, by using the decision, that the second indication information corresponding to the TS1s in the eight slot periodicities is 10, the receiving device may determine the amount of data in the 8^{th} TS1 based on different services. When a service transmitted in the first control periodicity is a constant bit rate (constant bit rate, CBR) service, the receiving device determines that the amount of the data carried in the 8^{th} TS 1 is 15-bytes data. When a service transmitted in the first control periodicity is an Ethernet packet (packet, PKT) service, the receiving device determines that the amount of the data carried in the 8^{th} TS1 is 0-byte data.

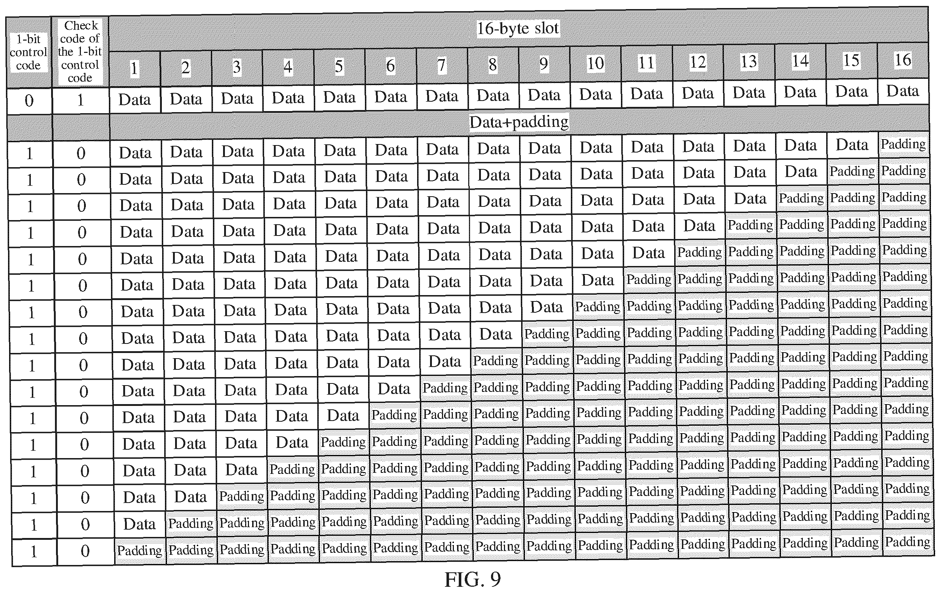

In FIG. 8(b), when determining, in a decision manner, that the second indication information corresponding to the TS1s in the eight slot periodicities is 01, the receiving device determines that an amount of data of service data carried in the TS1 in the 2^{nd} slot periodicity is 16-byte data. For an indication manner of the second indication information, refer to a code table shown in FIG. 9. In FIG. 9, when the second indication information is 01, it indicates that the amount of the data carried in the 16-byte slot is 16-byte data; or when the second indication information is 10, it indicates that the amount of the data carried in the 16-byte slot is any one piece of 0 to 15-byte data. In FIG. 9, the second indication information is carried by using two bits, where one bit is a 1-bit control code, and the other bit is a check code of the 1-bit control code. In another implementation, the second indication information may alternatively be indicated by using another bit, for example, one bit. This is not limited in this application. It should be understood that when the second indication information is carried by using another quantity of bits, a code table shown in FIG. 9 also exists.

It should be noted that in the embodiment shown in FIG. 8(a) and FIG. 8(b), the second indication information corresponding to the TS1s in the first seven slot periodicities is not used to control an amount of data carried in the TS1, but is used to participate in, with the TS1 in an 8^{th} slot periodicity, determining the amount of the data carried in the TS1 in the 8^{th} slot periodicity. In other words, although there is the second indication information corresponding to the TS1s in the first seven slot periodicities, the second indication information does not indicate an amount of data carried in each TS1 in the first seven slot periodicities. Therefore, it may be understood that the second indication information corresponding to the TS1s in the eight slot periodicities may alternatively be another value, provided that the receiving device may determine, based on eight pieces of second indication information, the amount of the data carried in the TS1 in the 8^{th} slot periodicity. It should be understood that in FIG. 8(a) and FIG. 8(b), a preset value carried in the TS1 in the first seven slot periodicities is 16-byte data.

In addition, it should be further noted that in FIG. 8(a) and FIG. 8(b), only an example in which each slot periodicity includes one slot in which the service data is carried is used (that is, a case in which p is equal to 1 is used). When each slot periodicity includes a plurality of slots in which the service data is carried, for example, p is equal to 2, two slots at same positions in each of the first seven slot periodicities are used to carry the service data, and an amount of carried data is a preset value. In this case, when determining an amount of data carried in two slots that correspond to same positions in the 8^{th} slot periodicity, the receiving device only needs to determine, based on a set of the second indication information, an amount of data carried in one of the two slots in the 8^{th} slot periodicity, and an amount of data carried in the other slot is a preset value.

It should be understood that FIG. 8(a) and FIG. 8(b) are merely an example rather than a limitation. The receiving device may determine, in a majority decision manner, the amount of the data carried in the TS1 in the 8^{th} slot periodicity shown in FIG. 8(a) and FIG. 8(b), or may determine the amount of data in another decision manner. In a possible implementation, alternatively, 16 bits of eight pieces of second indication information may be used as a whole, to indicate the amount of the data carried in the TS1 in the 8^{th} slot periodicity. This is not limited in this application.

In addition, the eight slot periodicities included in each control periodicity in FIG. 8(a) and FIG. 8(b) are sent or received (sent for the sending device, or received for the receiving device) in a time sequence. That is, the 1^{st} slot periodicity is first sent or received, and the 2^{nd} slot periodicity is then sent or received until the 8^{th} slot periodicity is sent or received. In addition, the eight slot periodicities included in each control periodicity are merely an example rather than a limitation. In addition, the p slots in each slot periodicity are not limited to the foregoing TS1.

It should be understood that when the payload area of the data frame is divided based on the control periodicity shown in FIG. 8(a) or FIG. 8(b), an intermediate frame includes 8*n slots and 8*n pieces of second indication information corresponding to the 8*n slots. If each slot is divided based on the 16 bytes shown in FIG. 6, and the second indication information corresponding to each slot is 2 bits, the intermediate frame includes 130*n bits.

In a second possible implementation, the first indication information is a set of second indication information corresponding to the p slots in each slot periodicity of the first control periodicity, and the receiving device determines, based on the set of second indication information corresponding to the p slots in each slot periodicity of the first control periodicity, an amount of data carried in p slots in an I^{th} slot periodicity of a second control periodicity.

It should be noted that an amount of data carried in the p slots in the I^{th} slot periodicity of the first control periodicity needs to be discussed in the following two manners.
1. When the first control periodicity is not the control periodicity first received by the receiving device, that is, before the first control periodicity is received, the receiving device further receives a third control periodicity. In this case, the amount of the data carried in the p slots in the I^{th} slot periodicity of the first control periodicity is determined by using a set of second indication information corresponding to p slots in each slot periodicity of the third control periodicity.

This process is the same as a process of determining, by using the set of second indication information corresponding to the p slots in each of the Y slot periodicities of the first control periodicity, an amount of data carried in p slots in an I^{th} slot periodicity of a second control periodicity. The third control periodicity is a control periodicity before the first control periodicity, and the second control periodicity is a next control periodicity of the first control periodicity. It should be understood that in the time sequence, the receiving device first receives the third control periodicity, then receives the first control periodicity, and finally receives the second control periodicity, where the three control periodicities are three consecutive control periodicities. In other words, when the receiving device determines the amount of the data carried in the p slots in the I^{th} slot periodicity of the first control periodicity, this is determined based on the set of second indication information corresponding to the p slots in each of the Y slot periodicities of the third control periodicity (the control periodicity before the first control periodicity). When the receiving device determines the amount of the data carried in the p slots in the I^{th} slot periodicity of the second control periodicity, this is determined based on the set of second indication information corresponding to the p slots in each of the Y slot periodicities of the first control periodicity (the control periodicity before the second control periodicity).

Positions of the p slots in each of the Y slot periodicities of the first control periodicity are the same as those of the p slots in the I^{th} slot periodicity of the second control periodicity, and an amount of data carried in p slots in each slot periodicity other than the I^{th} slot periodicity of the Y slot periodicities of the first control periodicity is a preset value. In addition, positions of the p slots in each of the Y slot periodicities of the third control periodicity are the same as those of the p slots in the I^{th} slot periodicity of the first control periodicity. In addition, an amount of data carried in p slots in each slot periodicity other than the I^{th} slot periodicity of the Y slot periodicities of the third control periodicity is the preset value. In addition, an amount of data carried in p slots in each slot periodicity other than the I^{th} slot periodicity of Y-1 slot periodicities of the second control periodicity is the preset value.

2. When the first control periodicity is the control periodicity first received by the receiving device, that is, before the first control periodicity is received, the receiving device does not receive another control periodicity. In this case, the amount of the data carried in the p slots in the I^{th} slot periodicity of the first control periodicity is a preset value. That is, the amount of the data carried in the p slots in each slot periodicity of the first control periodicity is a preset value.

It should be understood that in the time sequence, the receiving device first receives the first control periodicity, and then receives the second control periodicity, where the first control periodicity and the second control periodicity are two consecutive control periodicities. In this case, the receiving device obtains the set of second indication information corresponding to the p slots in each slot periodicity of the first control periodicity, and determines, based on the set of second indication information, the amount of the data carried in the p slots in the I^{th} slot periodicity of the second control periodicity.

Positions of the p slots in each of the Y slot periodicities of the first control periodicity is the same as those of the p slots in the I^{th} slot periodicity of the second control periodicity, and the amount of the data carried in the p slots in each of the Y slot periodicities of the first control periodicity is a preset value. In addition, an amount of data carried in p slots in each slot periodicity other than the I^{th} slot periodicity of Y-1 slot periodicities of the second control periodicity is the preset value.

Similarly, for the slots in which the amount of data being the preset value is carried, the receiving device may determine, based on the positions or a time sequence or time sequence positions of the slots (to be specific, the slots are located in a specific slot periodicity of the corresponding control periodicity and the slots are located in specific slots of a slot periodicity), whether the amount of the data carried in the p slots in each slot periodicity of each control periodicity is the preset value or a value that needs to be determined by using the set of the second indication information. It should be understood that for related descriptions and a value of the preset value, refer to the descriptions in the first implementation. Details are not described herein again.

It should be noted that the I^{th} slot periodicity is any one of the Y slot periodicities. For example, the first control periodicity includes Y slot periodicities. When the I^{th} slot periodicity belongs to the first control periodicity, the I^{th} slot periodicity is one of the Y slot periodicities included in the first control periodicity. To be specific, I is an integer greater than or equal to 1 and less than or equal to Y. For example, the I^{th} slot periodicity may be the 1^{st} slot periodicity (I is equal to 1) or a last slot periodicity (I is equal to Y).

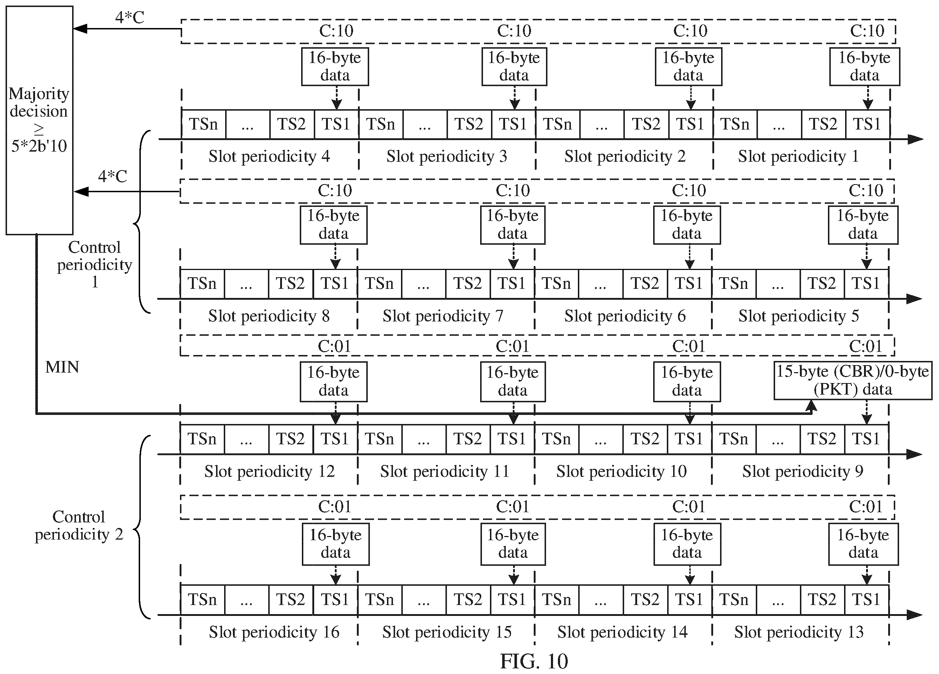

Specifically, descriptions are provided with reference to FIG. 10. In FIG. 10, the first control periodicity includes eight slot periodicities (namely, a slot periodicity 1 to a slot periodicity 8, where Y is equal to 8), the second control periodicity includes eight slot periodicities (namely, a slot periodicity 9 to a slot periodicity 16), and each slot periodicity includes n slots. A preset value carried in one slot TS1 (that is, p is equal to 1) in each of the eight slot periodicities of the first control periodicity is 16-byte service data. After receiving all slots in the first control periodicity, the receiving device receives, in total, a set of second indication information corresponding to the TS1s in the eight slot periodicities. The set of eight pieces of second indication information forms first indication information. The receiving device determines, based on the set of eight pieces of second indication information and by using a majority decision, an amount of data carried in TS1 in the 1^{st} slot periodicity (or a slot periodicity 9 in FIG. 10, where I is equal to 1) of the second control periodicity.

For example, when determining, by using the decision, that the second indication information corresponding to TS1s in the eight slot periodicities is 10, the receiving device may determine the amount of data in the TS1 in the 1^{st} slot periodicity of the second control periodicity based on different services. When a service transmitted in the first control periodicity is a CBR service, the receiving device determines that the amount of the data carried in the TS1 in the 1^{st} slot periodicity of the second control periodicity is 15-byte data. When a service transmitted in the first control periodicity is a PKT service, the receiving device determines that the amount of the data carried in the TS1 in the 1^{st} slot periodicity of the second control periodicity is 0-byte data.

It should be understood that, for an indication manner of the second indication information, still refer to the code table shown in FIG. 9. For descriptions of the code table and related extensions in FIG. 9, refer to the foregoing related parts. Details are not described herein again.

It should be noted that in FIG. 10, the second indication information corresponding to the TS1s in the first control periodicity is not used to control the amount of the data carried in the TS1, but is used to determine the amount of the data carried in the TS1 in the 1^{st} slot periodicity of the second control periodicity. That is, the second indication information corresponding to eight TS1s in the first control periodicity does not indicate an amount of data carried in each TS1 corresponding to the second indication information. The receiving device is configured to determine, based on the set of second indication information corresponding to the eight TS1s, the amount of the data carried in the TS1 in the 1^{st} slot periodicity of the second control periodicity.

Similarly, when the payload area of the data frame is divided based on the control periodicity shown in FIG. 10, an intermediate frame includes 8*n slots and 8*n pieces of second indication information corresponding to the 8*n slots. If each slot is divided based on the 16 bytes shown in FIG. 6, and the second indication information corresponding to each slot is 2 bits, the intermediate frame includes 130*n bits.

It should be understood that FIG. 10 is described by using an example in which the first control periodicity is the control periodicity first received by the receiving device. That is, an amount of data carried in the 1^{st} slot TS1 in the 1^{st} slot periodicity of the first control periodicity is a preset value (for example, 16-byte data in FIG. 10). When the first control periodicity is not the control periodicity first received by the receiving device, that is, the receiving device further receives the third control periodicity before receiving the first control periodicity, the amount of the data carried in the 1^{st} slot TS1 in the 1^{st} slot periodicity of the first control periodicity is determined by the receiving device by using a decision and a set of second indication information (eight pieces of second indication information) of the third control periodicity.

In addition, it should be further noted that in FIG. 10, only an example in which each slot periodicity includes one slot in which the service data is carried is used (that is, a case in which p is equal to 1 is used). When each slot periodicity includes a plurality of slots in which the service data is carried, for example, p is equal to 2, two slots at same positions in each slot periodicity of the first control periodicity are used to carry the service data, and an amount of carried data is a preset value. In this case, when determining the amount of the data carried in the two slots that correspond to the same positions in the 1^{st} slot periodicity of the second control periodicity, the receiving device only needs to determine, based on the set of the second indication information, an amount of data carried in one of the two slots in the 1^{st} slot periodicity of the second control periodicity, and an amount of data carried in the other slot is a preset value.

It should be understood that FIG. 10 is merely an example rather than a limitation. The receiving device may determine, in the majority decision manner shown in FIG. 10, or in another decision manner or by using a determining method, the amount of the data carried in the p slots. In a possible implementation, all bits in the second indication information may alternatively be used as a whole, to indicate the amount of the data carried in the p slots in the I^{th} slot periodicity of the second control periodicity. This is not limited in this application.

In addition, the eight slot periodicities included in each control periodicity in FIG. 10 are merely an example rather than a limitation. In addition, the p slots in each slot periodicity are not limited to the foregoing TS1, and may be other one or more slots at same positions in each slot periodicity, for example, may be TS2 and TS8, or another case. In addition, the I^{th} slot periodicity is not limited to the 1^{st} slot periodicity in FIG. 10, and may be any slot periodicity of the second control periodicity, for example, may be a last slot periodicity (namely, the slot periodicity 8 in FIG. 10).

In a third possible implementation, the first indication information is a set of second indication information corresponding to p slots in each slot periodicity of the first control periodicity, and the first indication information is an amount of data carried in the p slots. In other words, after obtaining the first indication information, the receiving device determines a value of the first indication information as the amount of the data carried in the p slots.

Specifically, the receiving device obtains the first indication information, and determines that an amount of data carried in p slots in a Y^{th} slot periodicity of the first control periodicity is the value of the first indication information. Alternatively, the receiving device may determine that an amount of data carried in p slots in an I^{th} slot periodicity of a second control periodicity is the value of the first indication information.

In a specific implementation, the first indication information may be divided into first information and second information. The first information is a Cm value of rate justification control (justification control, JC) information, and all Cm values of the first information indicate the amount of the data carried in the p slots. The second information is a first ΣCnD value of the JC, and the second information indicates remaining data that is not sent by a transmit end in the first control periodicity.

When the receiving device determines, based on the first information, the amount of the data carried in the p slots in the Y^{th} slot periodicity of the first control periodicity, this process is the same as a process of determining, by using the set of second indication information, an amount of data carried in p slots in a Y^{th} slot periodicity of the first control periodicity. That is, for this process, refer to related descriptions in the first implementation. When the receiving device determines, based on the first information, the amount of the data carried in the p slots in the I^{th} slot periodicity of the second control periodicity, this process is the same as a process of determining, by using the set of second indication information, an amount of data carried in p slots in an I^{th} slot periodicity of the second control periodicity. That is, for this process, refer to descriptions in the second implementation. Details are not described herein again.

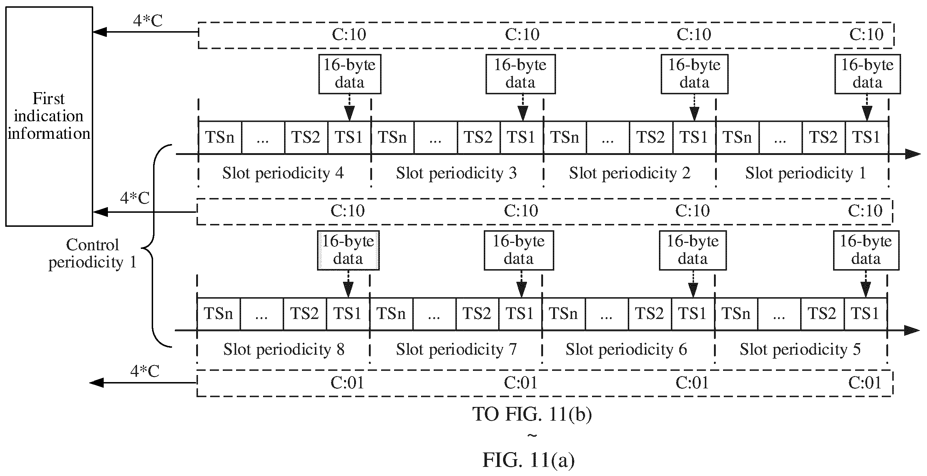

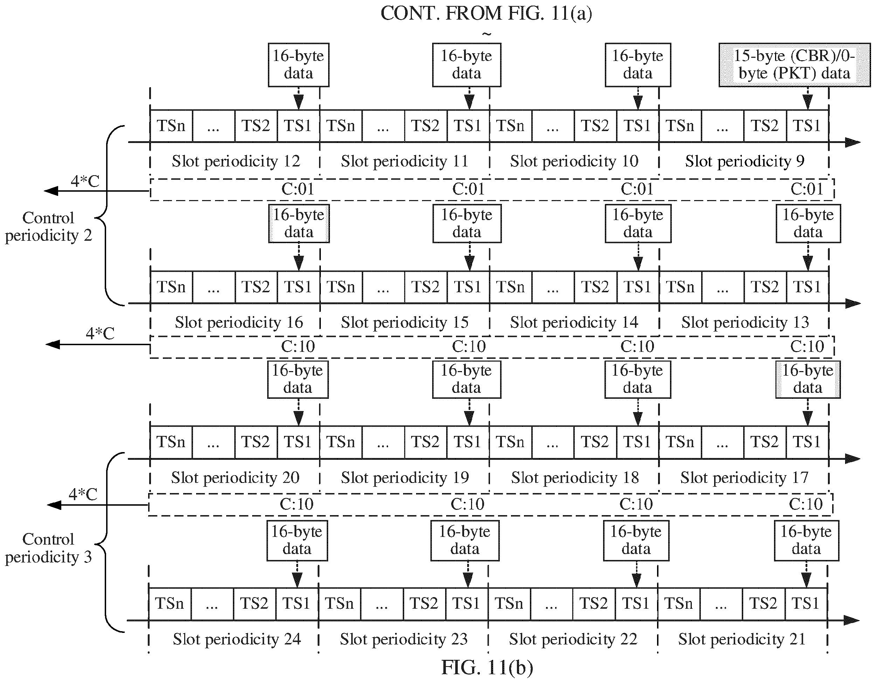

Specifically, the first information and the second information are described with reference to FIG. 11(a) and FIG. 11(b). In FIG. 11(a) and FIG. 11(b), the first control periodicity includes eight slot periodicities (that is, Y is equal to 8), and each slot periodicity includes n slots. A preset value carried in one slot TS1 (that is, p is equal to 1) in each of the eight slot periodicities of the first control periodicity is 16-byte service data. After receiving all slots of the first control periodicity, the receiving device receives, in total, a set of second indication information corresponding to eight TS1s (namely, a set of second indication information of 8*2 bits). The set of eight pieces of second indication information forms first indication information. The first information may be carried by using 12 bits in the 16 bits, and the second information may be carried by using 4 bits in the 16 bits.

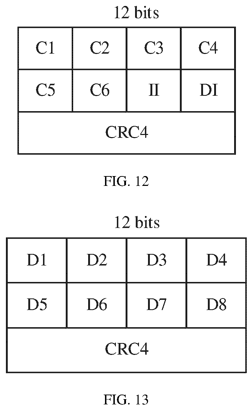

Specifically, content included in the first information may be shown in FIG. 12. In FIG. 12, each of C1, C2, C3, C4, C5, C6, II and DI occupies one bit, and CRC4 occupies four bits. For meanings of C1, C2, C3, C4, C5, C6, II, DI, and CRC4, refer to related regulations in the ITU-TG.709/Y.1331 protocol. Details are not described herein again. The first ΣCnD value included in the second information may be D1, D2, D3, or D4, where each of D1, D2, D3, and D4 occupies one bit.

It should be noted that the first information and the second information are determined by using first indication information of one control periodicity. In other words, each control periodicity has first information and second information that correspond to the control periodicity. Therefore, second information corresponding to a second control periodicity indicates remaining data that is not sent by a transmit end in the second control periodicity. A second ΣCnD value included in the second information corresponding to the second control periodicity may be D5, D6, D7, or D8, where each value of D5, D6, D7, and D8 occupies one bit. Similarly, a third ΣCnD value included in second information corresponding to a third control periodicity may be CRC4.

When data is transmitted by using the first information and the second information, ΣCnD needs to be transmitted in three control periodicities. In other words, a sum of remaining data of 1^{st} three consecutive control periodicities (including a total amount of remaining data in the 1^{st} three consecutive control periodicities and a previous control periodicity) is transferred by using ΣCnD in 2^{nd} three consecutive control periodicities. That is, the three control periodicities D1 to D8+CRC4 are used as a whole. D1 to D8 transferred in the 2^{nd} three consecutive control periodicities as a whole indicates a sum of remaining data in the 1^{st} three consecutive control periodicities.

In addition, when each slot periodicity includes a plurality of slots used to transmit service data, that is, p is greater than 1, the first information and the second information occupy only 16 bits in the set of second indication information obtained in each control periodicity, to control an amount of data in one of the two slots, and an amount of data in the other slot is a preset value. For example, when p is 2, if service data in each of the eight slot periodicities of each control periodicity is carried in the TS2 and TS3 in FIG. 11(a) and FIG. 11(b), the receiving device obtains 16 pieces of second indication information in each control periodicity. When the receiving device determines an amount of data in the TS2 in an 8^{th} slot periodicity of the first control periodicity, a value of first information carried in first 16 bits of second indication information that corresponds to TS2s in first seven slot periodicities and that is received by the receiving device is the amount of data in the TS2 in the 8^{th} slot periodicity. In addition, an amount of data carried in the TS3 in the 8^{th} slot periodicity is a preset value.

It should be understood that, for an indication manner of the second indication information, still refer to the code table shown in FIG. 9. For descriptions of the code table and related extensions in FIG. 9, refer to the foregoing related parts. Details are not described herein again. Similarly, in FIG. 11(a) and FIG. 11(b), the second indication information corresponding to the TS1s in the first control periodicity is not used to control the amount of the data carried in the TS1, and the value of the first indication information formed by the second indication information is the amount of data in the TS1 in the 8^{th} slot periodicity of the first control periodicity, or an amount of data carried in the TS1 in the 1^{st} slot periodicity of the second control periodicity. That is, the second indication information corresponding to eight TS1s in the first control periodicity does not indicate an amount of data carried in each TS1 corresponding to the second indication information.

It should be understood that in FIG. 11(a) and FIG. 11(b), only an example in which each slot periodicity includes one slot in which the service data is carried is used (that is, a case in which p is equal to 1 is used). When each slot periodicity includes a plurality of slots in which the service data is carried, for example, p is equal to 2, two slots at same positions in each slot periodicity of the first control periodicity are used to carry the service data, and an amount of carried data is a preset value. In this case, the receiving device needs to determine only an amount of data carried in one of the two slots, and an amount of data carried in the other slot is a preset value.

It should be understood that FIG. 11(a) and FIG. 11(b) are merely an example rather than a limitation, and the eight slot periodicities included in each control periodicity in FIG. 11(a) and FIG. 11(b) are merely an example rather than a limitation. In addition, the p slots in each slot periodicity are not limited to the foregoing TS1. Similarly, an intermediate frame is defined as 8*n slots and 8*n pieces of second indication information corresponding to the 8*n slots.

In a fourth possible implementation, the first indication information is a set of second indication information corresponding to q slots of the first control periodicity. The first control periodicity includes N groups, and a quantity of slots in each of the N groups is q. The receiving device determines, based on a set of second indication information corresponding to q slots of an I^{th} group in the first control periodicity, an amount of data carried in q slots of an (I+1)^{th} group in the first control periodicity. I is an integer greater than or equal to 1 and less than or equal to N. q is an integer greater than 1.

It should be noted that in the fourth possible implementation, q consecutive slots of a same service are grouped together, and one control periodicity may include N groups. An amount of data carried in the q slots in the 2^{nd} group is determined by using first indication information including a set of second indication information corresponding to the q slots in the 1^{st} group. The q slots in each group have same position in a corresponding slot periodicity.

It should be noted that the q slots of the N groups in the first control periodicity are determined by using first indication information including a set of second indication information corresponding to q slots of an N^{th} group in N groups in a third control periodicity. The third control periodicity is a control periodicity before the first control periodicity. In other words, in a time sequence, the receiving device first receives the third control periodicity, and then receives the first control periodicity, and the third control periodicity and the first control periodicity are two consecutive control periodicities.

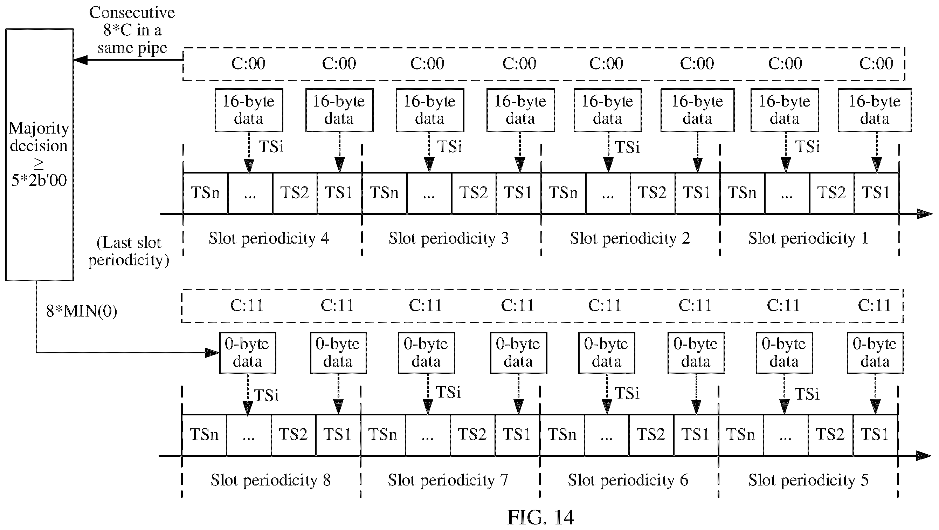

Specifically, descriptions are provided with reference to FIG. 14. In FIG. 14, the first control periodicity is divided into two groups (N is equal to 2), including eight slot periodicities (Y is equal to 8). Eight slots (q is equal to 8, and when p represents a quantity of slots in which data is carried in each slot periodicity, p is equal to 2) in a slot periodicity 1 to a slot periodicity 4 are respectively TS1 and TSi in the slot periodicity 1, TS1 and TSi in the slot periodicity 2, TS1 and TSi in the slot periodicity 3, and TS1 and TSi in the slot periodicity 4, and form the 1^{st} group of the first control periodicity, and eight slots in a slot periodicity 5 to a slot periodicity 8 are respectively TS1 and TSi in the slot periodicity 5, TS1 and TSi in the slot periodicity 6, TS1 and TSi in the slot periodicity 7, and TS1 and TSi in the slot periodicity 8, and form the 2^{nd} group of the first control periodicity. After receiving all the eight slots in the 1^{st} group, the receiving device receives, in total, a set of second indication information corresponding to the eight slots, and the set of eight pieces of second indication information forms first indication information. The receiving device determines, by using a majority decision, an amount of data carried in the eight slots in the 2^{nd} group.

For example, when determining, by using the decision, that the second indication information corresponding to the TS1s in the eight slot periodicities is 00, the receiving device may determine the amount of data in the eight slots in the 2^{nd} group based on different services. When a service transmitted in the first control periodicity is a CBR service, the receiving device determines that the amount of data in the eight slots in the 2^{nd} group is 15-byte data. When a service transmitted in the first control periodicity is a PKT service, the receiving device determines that the amount of data in the eight slots in the 2^{nd} group is 0-byte data.

It should be understood that, for an indication manner of the second indication information, still refer to the code table shown in FIG. 9. For descriptions of the code table and related extensions in FIG. 9, refer to the foregoing related parts. Details are not described herein again. It should be noted that in FIG. 14, the second indication information corresponding to the eight slots in the 1^{st} group is not used to control the amount of the data carried in the eight slots, but is used to determine the amount of the data carried in the eight slots in the 2^{nd} group. That is, the second indication information corresponding to the eight slots in the 1^{st} group does not indicate an amount of data carried in each TS1 corresponding to the second indication information. The receiving device is configured to determine, based on the set of second indication information corresponding to the eight slots, the amount of the data carried in the eight slots in the 2^{nd} group.

It should be understood that FIG. 14 is described by using an example in which the first control periodicity is the control periodicity first received by the receiving device. That is, an amount of data carried in the eight slots in the 1^{st} group of the first control periodicity is a preset value (for example, 16-byte data in FIG. 10). When the first control periodicity is not the control periodicity first received by the receiving device, that is, the receiving device further receives a third control periodicity before the first control periodicity, the amount of the data carried in the eight slots in the 1^{st} group of the first control periodicity is determined by the receiving device by using a decision and a set of second indication information corresponding to eight slots in a last group of the third control periodicity.

In addition, it should be further noted that in FIG. 14, only an example in which each slot periodicity includes two slots in which service data is carried is used (that is, a case in which p is equal to 2 is used). In this case, the first control periodicity may be divided into another quantity of groups. It should be understood that, when p does not indicate the quantity of slots used to carry the service data in each slot periodicity, in the embodiment shown in FIG. 14, where p is equal to 8, the receiving device generates the first indication information based on the set of eight pieces of second indication information corresponding to the eight slots in the first control periodicity, to determine the amount of the data carried in the eight slots in the second control periodicity.

It should be understood that FIG. 14 is merely an example rather than a limitation. The receiving device may determine, in the majority decision manner shown in FIG. 14, or in another decision manner or by using a determining method, the amount of the data carried in the q slots. In a possible implementation, alternatively, all the bits in the second indication information may be used as a whole, to indicate the amount of the data carried in the q slots. This is not limited in this application.

In addition, the eight slot periodicities included in each control periodicity in FIG. 14 are merely an example rather than a limitation. In addition, the p slots in each slot periodicity are not limited to the foregoing TS 1 and TSi, and may be other one or more slots at same positions in each slot periodicity, for example, may be TS2 and TS3, or another case. Similarly, an intermediate frame is defined as 8*n slots and 8*n pieces of second indication information corresponding to the 8*n slots.

In a fifth possible implementation, the first indication information is T-1 pieces of rate justification control information in first T-1 groups of T groups of the first control periodicity. The first indication information is used to determine an amount of data carried in p slots in a Y^{th} slot periodicity of the first control periodicity. Specifically, the first control periodicity includes T groups, an i^{th} byte in a first slot of the T groups is used to carry the rate justification control information, and the first slot is any slot in a last slot periodicity of each of the first T-1 groups of the T groups. The i^{th} byte is any byte in the first slot. The p slots in the Y^{th} slot periodicity include a slot at a same position in which the JC is carried, and an amount of data carried in p slots in each of first Y-1 slot periodicities of the first control periodicity is a preset value.

Similarly, for the slots in which the amount of data being the preset value is carried, the receiving device may determine, based on the positions or a time sequence or time sequence positions of the slots (to be specific, the slots are located in a specific slot periodicity of the corresponding control periodicity and the slots are located in specific slots of a slot periodicity), whether the amount of the data carried in the p slots in each slot periodicity of each control periodicity is the preset value or a value that needs to be determined by using the first indication information. It should be understood that for related descriptions and a value of the preset value, refer to the descriptions in the first implementation. Details are not described herein again.

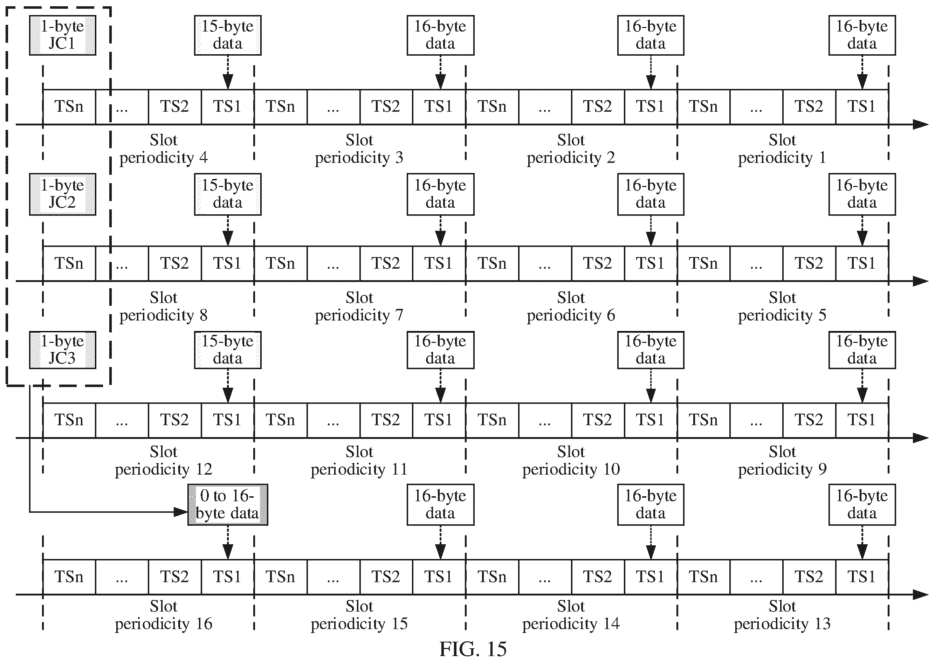

Specifically, descriptions are provided with reference to FIG. 15. In FIG. 15, the first control periodicity includes 16 slot periodicities (that is, Y is equal to 16), and each slot periodicity includes n slots. The 16 slot periodicities of the first control periodicity are divided into four groups (that is, T is equal to 4), and three pieces of rate justification control information are each carried in the 1^{st} slot TS1 of a last slot periodicity (including a slot periodicity 4, a slot periodicity 8, or a slot periodicity 12) of each of first three groups. The three pieces of rate justification control information form first indication information. The receiving device determines, based on the three pieces of rate justification control information, an amount of data carried in TS1 in a 16^{th} slot periodicity of the first control periodicity.

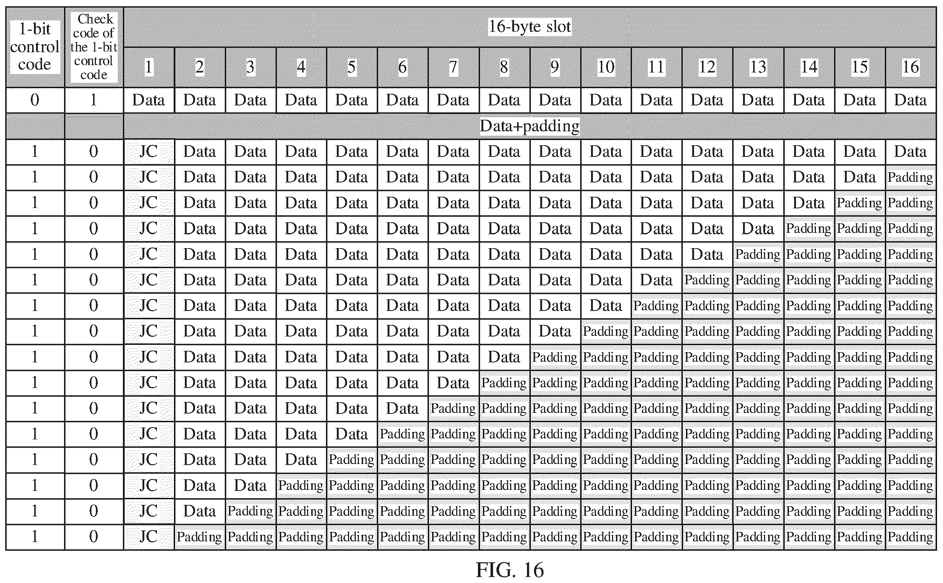

It should be noted that FIG. 16 is a schematic diagram in which rate justification control information in each group is carried in the 1^{st} byte of TS1. It should be understood that FIG. 16 is merely an example, and the rate justification control information in each group may alternatively be carried in another byte, for example, a 16^{th} byte of a slot. This is not limited in this application.

For example, the receiving device may determine, by checking the three pieces of rate justification control information and based on a checked data increment, the amount of the data carried in the TS1 in the 16^{th} slot periodicity of the first control periodicity.

In addition, only an example in which each slot periodicity includes one slot that carries service data (that is, a case in which p is equal to 1) is used in FIG. 15. When each slot periodicity includes a plurality of slots that carries the service data, that is, p is greater than 1, two slots at same positions in each slot periodicity of the first control periodicity are used to carry the service data, and an amount of carried data is a preset value. When determining the amount of the data carried in the two slots at the same positions that correspond to a Y^{th} slot periodicity of the first control periodicity, the receiving device only needs to determine, based on the rate justification control information, an amount of data carried in one of p slots in the Y^{th} slot periodicity of the first control periodicity, and an amount of data carried in the other slot is a preset value.

It should be understood that, the 16 slot periodicities included in each control periodicity in FIG. 15 are merely an example rather than a limitation. In addition, the p slots in each slot periodicity are not limited to the foregoing TS1, and may be other one or more slots at same positions in each slot periodicity, for example, may be TS3 and TS4, or another case.

In addition, the solutions in embodiments of this application may be properly combined for use, and explanations or descriptions of terms in the embodiments may be cross-referenced or explained in the embodiments. This is not limited.

In the foregoing embodiments provided in this application, the solutions of the data transmission method provided in embodiments of this application are separately described from a perspective of interaction between devices. It may be understood that, to implement the foregoing functions, each device include a corresponding hardware structure and/or software module for performing the functions. Persons skilled in the art should be easily aware that with reference to units and algorithm steps in the examples described in embodiments disclosed in this specification, this application may be implemented by hardware or a combination of hardware and computer software. Whether a function is performed by hardware or hardware driven by computer software depends on particular applications and design constraint conditions of the technical solutions. Persons skilled in the art may use different methods to implement the described functions for each particular application, but it should not be considered that the implementation goes beyond the scope of this application.

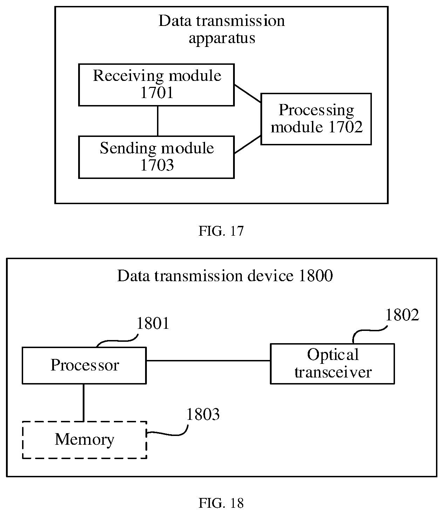

FIG. 17 is a schematic block diagram of a data transmission apparatus 1700 according to an embodiment of this application. The apparatus 1700 includes a receiving module 1701, and the receiving module 1701 may be configured to implement a corresponding receiving function. The receiving module 1701 may also be referred to as a receiving unit.

The apparatus 1700 further includes a processing module 1702, and the processing module 1702 may be configured to implement a corresponding processing function.

The apparatus 1700 further includes a sending module 1703, and the sending module 1703 may be configured to implement a corresponding sending function. The sending module 1703 may also be referred to as a sending unit.

Optionally, the apparatus 1700 further includes a storage unit. The storage unit may be configured to store instructions and/or data. The processing unit 1702 may read the instructions and/or the data in the storage unit, so that the apparatus implements an action performed by the related apparatus in the foregoing method embodiments.

The apparatus 1700 may be configured to perform an action performed by the sending device or the receiving device in the foregoing method embodiments. In this case, the apparatus 1700 may be a component of the sending device or the receiving device. The receiving module 1701 is configured to perform a receiving-related operation of the sending device or the receiving device in the foregoing method embodiments. The processing module 1702 is configured to perform a processing-related operation of the sending device or the receiving device in the foregoing method embodiments. The sending module 1703 is configured to perform a sending-related operation of the sending device or the receiving device in the foregoing method embodiments.

In a design, the apparatus 1700 is configured to perform an action performed by any device in the foregoing method embodiments. In an embodiment, the apparatus may be configured to perform an operation of the sending device in FIG. 7.

For example, the sending module 1703 is configured to send a data frame, where the data frame includes a first control periodicity, the first control periodicity corresponds to first indication information, and the first indication information indicates an amount of data carried in p slots. The first control periodicity includes Y slot periodicities, and each of the Y slot periodicities includes y slots. Y is an integer greater than or equal to 1, y is an integer greater than 1, and p is an integer greater than or equal to 1 and less than or equal to y.

It should be understood that a specific process in which the modules perform the foregoing corresponding steps is described in detail in the foregoing method embodiments. For brevity, details are not described herein again.

In addition, the receiving module 1701, the processing module 1702, and the sending module 1703 in the apparatus may further implement other operations or functions of the receiving device in the foregoing methods. Details are not described herein again.

In another embodiment, the apparatus may be configured to perform an operation of the receiving device in FIG. 7.

For example, the receiving module 1701 is configured to receive a data frame.

The sending module 1703 is configured to: obtain, from the data frame, first indication information corresponding to a first control periodicity of the data frame, and determine, based on the first indication information, an amount of data carried in p slots. The first control periodicity includes Y slot periodicities, and each of the Y slot periodicities includes y slots. Y is an integer greater than or equal to 1, y is an integer greater than 1, and p is an integer greater than or equal to 1 and less than or equal to y.

It should be understood that a specific process in which the modules perform the foregoing corresponding steps is described in detail in the foregoing method embodiments. For brevity, details are not described herein again.

The following describes in detail, with reference to FIG. 18, a data transmission apparatus provided in an embodiment of this application. It should be understood that descriptions of the apparatus embodiments correspond to descriptions of the method embodiments. Therefore, for content that is not described in detail, refer to the foregoing method embodiments. For brevity, some content is not described again.

FIG. 18 is a schematic diagram of a structure of a possible data transmission device according to an embodiment of this application. The communication device is a sending device or a receiving device. As shown in FIG. 18, the communication device 1800 includes a processor 1801, an optical transceiver 1802, and a memory 1803. The memory 1803 is optional. The communication device 1800 may be used in both a transmit side device (for example, a sending device) and a receive side device (for example, the foregoing receiving device).

When the data transmission device is used in the transmit side device, the processor 1801 and the optical transceiver 1802 are configured to implement the method performed by the sending device shown in FIG. 7. In an implementation process, steps in a processing procedure may be implemented by using an integrated logic circuit of hardware in the processor 1801 or an instruction in a form of software, to complete the method performed by the sending device in the foregoing accompanying drawings. The optical transceiver 1802 is configured to: receive and process a to-be-sent data frame, and send the data frame to a peer device (also referred to as a receiving device).

When the data transmission device is used in the receive side device, the processor 1801 and the optical transceiver 1802 are configured to implement the method performed by the receiving device shown in FIG. 7. In an implementation process, steps in a processing procedure may be implemented by using an integrated logic circuit of hardware in the processor 1801 or an instruction in a form of software, to complete the method performed by the receive side device in the foregoing accompanying drawings. The optical transceiver 1802 is configured to receive a data frame sent by a peer device (also referred to as a sending device), to send the data frame to the processor 1801 for subsequent processing.

The memory 1803 may be configured to store instructions, so that the processor 1801 may be configured to perform the steps mentioned in the foregoing figures. Alternatively, the memory 1803 may be configured to store another instruction, to configure a parameter of the processor 1801 to implement a corresponding function.

It should be noted that in the diagram of the hardware structure of the network device in FIG. 2, the processor 1801 and the memory 1803 may be located in a tributary board, or may be located in a board integrating the tributary board and a line board. Alternatively, there are a plurality of processors 1801 and a plurality of memories 1803, which are respectively located on a tributary board and a line board, and the two boards cooperate with each other to complete the foregoing method steps.

It should be noted that the apparatus in FIG. 18 may alternatively be configured to perform the method steps in the foregoing mentioned variations of the embodiments shown in the foregoing accompanying drawings. Details are not described herein again.

Based on the foregoing embodiments, an embodiment of this application further provides a computer-readable storage medium. The storage medium stores a software program. When the software program is read and executed by one or more processors, the method provided in any one or more of the foregoing embodiments may be implemented. The computer-readable storage medium may include any medium that can store program code, such as a USB flash drive, a removable hard disk, a read-only memory, a random access memory, a magnetic disk, or an optical disc.

Based on the foregoing embodiments, an embodiment of this application further provides a chip. The chip includes a processor, and is configured to: implement functions in any one or more of the foregoing embodiments, for example, obtain or process a data frame in the foregoing methods. Optionally, the chip further includes a memory, and the memory is configured to store necessary program instructions and data that are executed by the processor. The chip may include a chip, or may include a chip and another discrete device.

It is clear that persons skilled in the art can make various modifications and variations to embodiments of this application without departing from the scope of embodiments of this application. In this way, this application is intended to cover these modifications and variations to embodiments of this application provided that they fall within the scope of protection defined by the claims and their equivalent technologies of this application.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

Persons of ordinary skill in the art may be aware that units and steps in the examples described with reference to embodiments disclosed in this specification can be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the apparatus embodiments described above are merely examples. For example, division into the units is merely logical function division, and may be another division during actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

All or some of the foregoing embodiments may be implemented by software, hardware, firmware, or any combination thereof. When software is used to implement the embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. A data transmission method, comprising:
receiving a data frame, wherein the data frame comprises a first control periodicity; and
obtaining, from the data frame, first indication information corresponding to the first control periodicity, wherein the first indication information is used to determine an amount of data carried in p slots, the first control periodicity comprises Y slot periodicities, each of the Y slot periodicities comprises y slots, Y is an integer greater than or equal to 1, y is an integer greater than 1, and p is an integer greater than or equal to 1 and less than or equal to y.

2. The method according to claim 1, wherein that the first indication information is used to determine an amount of data carried in p slots comprises:
the first indication information is used to determine an amount of data carried in p slots in a Y^{th} slot periodicity of the first control periodicity; or
the first indication information is used to determine an amount of data carried in p slots in an I^{th} slot periodicity of a second control periodicity, wherein the second control periodicity is a next control periodicity of the first control periodicity, and I is an integer greater than or equal to 1 and less than or equal to Y.

3. The method according to claim 2, wherein
when the first indication information is used to determine the amount of the data carried in the p slots in the Y^{th} slot periodicity of the first control periodicity, the first indication information is generated based on a set of second indication information corresponding to p slots in each slot periodicity of the first control periodicity, positions of p slots in each of first Y-1 slot periodicities of the first control periodicity are the same as those of the p slots in the Y^{th} slot periodicity, and an amount of data carried in the p slots in each of the first Y-1 slot periodicities of the first control periodicity is a preset value.

4. The method according to claim 2, wherein
when the first indication information is used to determine the amount of the data carried in the p slots in the I^{th} slot periodicity of the second control periodicity, the first indication information is generated based on a set of second indication information corresponding to p slots in each slot periodicity of the first control periodicity, positions of the p slots in the I^{th} slot periodicity of the second control periodicity are the same as those of the p slots in the Y slot periodicities of the first control periodicity, an amount of data carried in p slots in each slot periodicity other than the I^{th} slot periodicity of the Y slot periodicities of the first control periodicity is a preset value, and an amount of data carried in p slots in each slot periodicity other than the I^{th} slot periodicity of Y-1 slot periodicities of the second control periodicity is the preset value.

5. The method according to claim 1, wherein
the first indication information is generated based on a set of second indication information corresponding to p slots in each slot periodicity of the first control periodicity, and a value of the first indication information is an amount of data carried in the p slots.

6. The method according to claim 1, wherein
the first control periodicity comprises N groups, and a quantity of slots in each of the N groups is p;
the obtaining, from the data frame, first indication information corresponding to the first control periodicity of the data frame comprises: obtaining, from the data frame, first indication information corresponding to an I^{th} group of the first control periodicity of the data frame, wherein the first indication information corresponding to the I^{th} group is a set of second indication information corresponding to p slots of the I^{th} group, and I is an integer greater than or equal to 1 and less than or equal to N; and
that the first indication information is used to determine an amount of data carried in p slots comprises: the first indication information is used to determine an amount of data carried in p slots of an (I+1)^{th} group.

7. The method according to claim 2, wherein
when the first indication information is used to determine the amount of the data carried in the p slots in the Y^{th} slot periodicity of the first control periodicity, the first control periodicity comprises T groups, an i^{th} byte in a first slot of the T groups is used to carry rate justification control JC information, and the first slot is any slot in a last slot periodicity of each of first T-1 groups of the T groups, wherein the i^{th} byte is any byte in the first slot, the first indication information is generated based on the JC, the p slots in the Y^{th} slot periodicity comprise a slot at a same position in which the JC is carried, and an amount of data carried in p slots in each of first Y-1 slot periodicities of the first control periodicity is a preset value.

8. A data transmission method, comprising:
sending a data frame, wherein the data frame comprises a first control periodicity, the first control periodicity corresponds to first indication information, the first indication information is used to determine an amount of data carried in p slots, the first control periodicity comprises Y slot periodicities, each of the Y slot periodicities comprises y slots, Y is an integer greater than or equal to 1, y is an integer greater than 1, and p is an integer greater than or equal to 1 and less than or equal to y.

9. The method according to claim 8, wherein that the first indication information is used to determine an amount of data carried in p slots comprises: the first indication information is used to determine an amount of data carried in p slots in a Y^{th} slot periodicity of the first control periodicity; or the first indication information is used to determine an amount of data carried in p slots in an I^{th} slot periodicity of a second control periodicity, wherein the second control periodicity is a next control periodicity of the first control periodicity, and I is an integer greater than or equal to 1 and less than or equal to Y.

10. The method according to claim 9, wherein
when the first indication information is used to determine the amount of the data carried in the p slots in the Y^{th} slot periodicity of the first control periodicity, the first indication information is generated based on a set of second indication information corresponding to p slots in each slot periodicity of the first control periodicity, positions of p slots in each of first Y-1 slot periodicities of the first control periodicity are the same as those of the p slots in the Y^{th} slot periodicity, and an amount of data carried in the p slots in each of the first Y-1 slot periodicities of the first control periodicity is a preset value.

11. The method according to claim 9, wherein
when the first indication information is used to determine the amount of the data carried in the p slots in the I^{th} slot periodicity of the second control periodicity, the first indication information is generated based on a set of second indication information corresponding to p slots in each slot periodicity of the first control periodicity, positions of the p slots in the I^{th} slot periodicity of the second control periodicity are the same as those of the p slots in the Y slot periodicities of the first control periodicity, an amount of data carried in p slots in each slot periodicity other than the I^{th} slot periodicity of the Y slot periodicities of the first control periodicity is a preset value, and an amount of data carried in p slots in each slot periodicity other than the I^{th} slot periodicity of Y-1 slot periodicities of the second control periodicity is the preset value.

12. The method according to claim 8, wherein the first indication information is generated based on a set of second indication information corresponding to p slots in each slot periodicity of the first control periodicity, and a value of the first indication information is an amount of data carried in the p slots.

13. The method according to claim 8, wherein
the first control periodicity comprises N groups, a quantity of slots in each of the N groups is p, and the first indication information is generated based on a set of second indication information corresponding to p slots in an I^{th} group; and
that the first indication information is used to determine an amount of data carried in p slots comprises: the first indication information is used to determine an amount of data carried in p slots of an (I+1)^{th} group.

14. The method according to claim 9, wherein
when the first indication information is used to determine the amount of the data carried in the p slots in the Y^{th} slot periodicity of the first control periodicity, the first control periodicity comprises T groups, an i^{th} byte in a first slot of the T groups is used to carry rate justification control JC information, and the first slot is any slot in a last slot periodicity of each of first T-1 groups of the T groups, wherein the i^{th} byte is any byte in the first slot, the first indication information is generated based on the JC, the p slots in the Y^{th} slot periodicity comprise a slot at a same position in which the JC is carried, and an amount of data carried in p slots in each of first Y-1 slot periodicities of the first control periodicity is a preset value.

15. A data transmission apparatus, comprising a module configured to perform the method according to any one of claims 1 to 7, or a module configured to perform the method according to any one of claims 8 to 14.

16. A data transmission apparatus, comprising at least one processor, wherein the at least one processor is coupled to at least one memory, and the at least one processor is configured to execute a computer program or instructions stored in the at least one memory, so that the communication apparatus performs the method according to any one of claims 1 to 7 or the method according to any one of claims 8 to 14.

17. A chip, wherein the chip comprises a processor and a communication interface, the communication interface is configured to: receive a data frame and transmit the data frame to the processor, or send a data frame to another communication apparatus other than a communication apparatus comprising the chip, and the processor is configured to perform the method according to any one of claims 1 to 14.

18. A computer-readable storage medium, wherein the computer-readable storage medium stores computer instructions, and when the computer instructions are run on a computer, the computer is enabled to perform the method according to any one of claims 1 to 7 or the method according to any one of claims 8 to 14.

19. A computer program product, wherein the computer program product comprises computer program code, and when the computer program code is run on a computer, the computer is enabled to perform the method according to any one of claims 1 to 7 or the method according to any one of claims 8 to 14.
